# EUROPÄISCHE PATENTANMELDUNG

(11) **EP 4 592 219 A2**
(43) Veröffentlichungstag der Anmeldung: **30.07.2025**
(21) Anmeldenummer: 25182436.3
(22) Anmeldetag: 07.10.2022
(51) Int. Cl.: B65G 21/14

(54) **TRANSPORTVORRICHTUNG**

(30) Priorität: 08.10.2021 CH 0703712021; 03.06.2022 CH 6892022
(62) Teilanmeldung aus: 22200256.0
(71) Anmelder: Ferag AG, 8340 Hinwil ZH (CH)
(72) Erfinder: Fenile, Roberto, 8340 Hinwil (CH)
(74) Vertreter: Rentsch Partner AG

(57) **Zusammenfassung**

Gegenstand der Erfindung ist eine Transportvorrichtung (1) zum Transport von Stückgütern (S), umfassend einen feststehenden Zuführabschnitt (3) und einen entlang einer Förderrichtung (x) stromabwärts angeordneten feststehenden Abführabschnitt (4), und eine Ausschleusevorrichtung (5) umfassend eine erste (51) und eine zweite (52) Ausschleuseeinheit, welche entlang der Förderrichtung (x) zwischen dem feststehenden Zuführabschnitt (3) und dem feststehenden Abführabschnitt (4) angeordnet sind. Die erste Ausschleuseeinheit (51) und die zweite Ausschleuseeinheit (52) umfassen jeweils ein mittels eines eigenen Antriebsmotors (513, 523) antreibbares Förderband (514, 524), welche jeweils eine Transportfläche (515, 525) definieren, wobei beim Verfahren eines beweglichen Endes (511, 512, 521, 522) ein jeweiliger Leertrum (5141, 5142, 5241, 5242) der Förderbänder (514, 524) mittels eines Spannelements (516, 517, 526, 527) unterhalb der Transportflächen (515, 525) spannbar ist, indem das Spannelement (516, 517, 526, 527) mit Bezug zur jeweiligen Transportfläche (515, 525)mit einem Winkel von 30° bis 90°, vorzugsweise senkrecht, verfahrbar ist.

## Beschreibung

### TECHNISCHES GEBIET

Die vorliegende Erfindung liegt auf dem Gebiet der Fördertechnik, sie betrifft eine Transportvorrichtung zum Transport und Beabstanden von Stückgütern.

### HINTERGRUND DER ERFINDUNG

Bei der Nachbearbeitung, Kommissionierung und Verpackung von Stückgütern spielt die automatisierte Förderung von Stückgütern eine wichtige Rolle. Fördersysteme, insbesondere Rollen- oder Bandförderer zeichnen sich dabei neben anderem dadurch aus, dass sie eine platzsparende Sortierung und einen zeiteffizienten An- oder Abtransport von Stückgütern ermöglichen. Abhängig vom nachgelagerten Verfahrensschritt ist neben dem effizienten Transport von Stückgütern eine weitere wichtige Anforderung an Transportvorrichtungen das Beabstanden oder Ausschleusen von Stückgütern zu ermöglichen.

Zum Ausschleusen von Stückgütern aus einem Stückgutstrom sind bereits Ausschleusevorrichtungen bekannt. So sind beispielsweise zur weiteren Verteilung der ausgeschleusten Gegenstände Ausschleusevorrichtungen bekannt, bei denen innerhalb eines Kurvenbogens eine Weiche vorgesehen wird. Diese haben typischerweise ein verstellbares Leitelement in Form einer Weichenzunge, die verschwenkbar gelagert ist, wobei sie mit ihrem vorderen Ende schräg gegen den Förderstrom gerichtet ist. Beim Verschwenken gibt die Weichenzunge jeweils einen der beiden Ausgänge frei und versperrt den anderen Ausgang mit ihrer jeweiligen, als Leitfläche ausgebildeten Seitenflanke. Eine solche Vorrichtung geht beispielsweise aus der DE20004434U1 hervor.

Die Druckschrift DE20004434U1 offenbart einen Kurvenbahn-Ausschleuser bei welchem in einem Bogen einer Förderbahn eine Weiche mit einer verschwenkbaren Weichenzunge ausgebildet ist, welche seitliche Leitflächen hat und welche den einlaufenden Transportweg wahlweise zu einem bezüglich des Bogens radial inneren oder äußeren Ausgang leitet.

Alternativ zu Kurvenbahn-Ausschleusevorrichtungen sind Rollen-Ausschleuser bekannt, wobei mittels einer Anzahl von Rollen, die üblicherweise in wenigstens zwei Gruppen angeordnet sind, Stückgüter ausgeschleust werden. Jede der Gruppen weist eine gemeinsame Ausrichtung entlang einer Hauptdrehachse gegenüber einer Hauptförderrichtung auf. Typischerweise kann die eine Gruppe um 45° nach links gegenüber der Hauptförderrichtung ausgerichtet sein, während die zweite Gruppe um 45° nach rechts ausgerichtet ist. Fördergut kann durch diesen Ausschleuser gerade aus, 45° links oder rechts und 90° links oder rechts gefördert werden. Eine solche Vorrichtung geht aus der DE102010044239A1 hervor.

Die Druckschrift DE102010044239A1 offenbart einen Ausschleuser für Förderer, welcher eine Anzahl von Rollen umfasst, die in wenigstens zwei Gruppen angeordnet sind, wobei jede Gruppe eine gemeinsame Ausrichtung einer Hauptdrehachse gegenüber einer Hauptförderrichtung aufweist und die Hauptdrehachse von wenigstens zwei Gruppen in einem Winkel zueinanderstehen und wobei beide Gruppen separat antreibbar und ansteuerbar sind.

### DARSTELLUNG DER ERFINDUNG

Beim Transport von Stückgütern in einer Transportvorrichtung müssen die Stückgüter für nachgelagerte Prozesses oft takt- oder positionsgenau angeliefert werden. Oftmals werden die Stückgüter von einem stromaufwärts gelegenen Prozess jedoch nicht taktgenau abgegeben oder zugeführt. Somit muss innerhalb der Transportvorrichtung erreicht werden, dass diskontinuierlich zugeführte Stückgüter in einen kontinuierlichen Stückstrom gebracht werden, in welchem die Stückgüter am Ende der Transportvorrichtung taktgenau mit einem vorgegebenen Soll-Abstand zueinander übergeben werden. Somit ist oftmals ein reines Ausschleusen von Stückgütern nicht ausreichend, da zudem auch noch ein Beabstanden der Stückgüter zueinander auf einen Soll-Abstand erforderlich ist.

Beispielsweise kann am stromabwärtigen Ende der Transportvorrichtung ein Schalenförderer angeordnet sein, welcher mit einer konstanten Geschwindigkeit betrieben wird und dessen Förderschalen den Takt für die Zuführung der einzelnen Stückgüter vorgeben, sodass jedes der Stückgüter jeweils einer der Förderschalen zugeführt werden kann. Hierzu ist ein einheitlicher Soll-Abstand notwendig um gewährleisten zu können, dass je Förderschale ein Stückgut zugeführt wird. Bei zu engen Abständen einzelner Stückgüter zueinander kann es daher notwendig werden gezielt einzelne Stückgüter auszuschleusen um ein gleichzeitiges Übergeben von zwei oder mehr Stückgütern an den Folgeprozess zu vermeiden. Gleichzeitig sollen aber auch keine zu grossen Lücken zwischen den Stückgütern verbleiben um zu gewährleisten, dass keine Schalen ungenutzt bleiben. Um ein ungewolltes Herausfallen aus der Transportvorrichtung zu vermeiden, müssen die Stückgüter an einem Übergabepunkt zudem positionsgenau übergeben werden, damit das jeweilige Stückgut zielgenau jeweils in eine Förderschale übergeben werden kann.

Eine Aufgabe der Erfindung kann daher darin gesehen werden ein taktgenaues Übergeben von Stückgütern an einen nachgelagerten Prozess zu ermöglichen und einen Mindestabstand zwischen den einzelnen Stückgütern zu erreichen.

Eine bevorzugte Variante der Transportvorrichtung zum Transport von Stückgütern umfasst einen feststehenden oder beweglichen Zuführabschnitt und einen entlang einer Förderrichtung stromabwärts angeordneten feststehenden oder beweglichen Abführabschnitt. Unter feststehend ist in diesem Kontext zu verstehen, dass der jeweilige Zu- oder Abführabschnitt als Ganzes feststehend, daher statisch angeordnet ist. Einzelne Elemente, insbesondere Elemente zum Transport und zum Fördern von Stückgütern sind dabei jedoch beweglich angeordnet. So kann der feststehende oder bewegliche Zu- und Abführabschnitt beispielsweise als Rollen- oder Bandförderer ausgeführt sein, wobei die Rollen, respektive das Band, beweglich angeordnet sind. Unter der Förderrichtung ist hierbei die Wirkrichtung des Stroms an Stückgütern zu verstehen. Typischerweise wird stets nur in eine Richtung gefördert. Um bei auftretenden Problemen im nachgelagerten Prozess die Transportvorrichtung entleeren zu können, kann sowohl beim Zu- oder Abführabschnitt die Förderrichtung umgekehrt werden.

Um gezielt einzelne oder mehrere Stückgüter aus der Transportvorrichtung auszuschleusen, umfasst die Transportvorrichtung eine Ausschleusevorrichtung. Die Ausschleusevorrichtung umfasst eine erste und eine zweite Ausschleuseeinheit, welche entlang der Förderrichtung zwischen dem feststehenden oder beweglichen Zuführabschnitt und dem feststehenden oder beweglichen Abführabschnitt angeordnet sind. Die erste und die zweite Ausschleuseeinheit sind dabei vorzugsweise derart angeordnet, dass sie an den feststehenden oder beweglichen Zu- respektive den Abführabschnitt angrenzen.

Üblicherweise sind die erste und eine zweite Ausschleuseeinheit jedoch nicht direkt physisch gekoppelt, sondern es besteht ein Abstand zwischen dem feststehenden oder beweglichen Zu- und Abführabschnitt und der dazwischen angeordneten Ausschleusevorrichtung.

Optional können auch weitere Module, beispielsweise weitere Transport-oder Sortiermodule oder Weichen, zwischen dem Zu- und Abführabschnitt und der Ausschleusevorrichtung angeordnet sein. Bei auftretenden Problemen kann die Förderrichtung der Ausschleusevorrichtung umgekehrt werden. So können die sich bereits auf dem Abführabschnitt befindenden Stückgüter zu der Ausschleusevorrichtung zurückgeführt werden und mittels dieser Ausgeschleust werden.

Um Stückgüter entlang der Förderrichtung ausschleusen zu können, weist die erste Ausschleuseeinheit ein an den feststehenden oder beweglichen Zuführabschnitt angrenzend angeordnetes feststehendes oder bewegliches Ende und ein davon stromabwärts angeordnetes bewegliches Ende auf. Das bewegliche Ende ermöglicht es die Ausschleuseeinheit entlang der Förderrichtung zu verkürzen, wodurch eine Lücke entlang der Förderrichtung generierbar ist. Analog zur ersten Ausschleuseeinheit weist die zweite Ausschleuseeinheit ein der ersten Ausschleuseeinheit stromabwärts benachbart angeordnetes bewegliches Ende und ein davon stromabwärts an den feststehenden oder beweglichen Abführabschnitt angrenzend angeordnetes feststehendes oder bewegliches Ende auf.

Dabei ist der geschlossene Zustand als der Zustand definiert, indem die jeweiligen beweglichen Enden zueinander im Wesentlichen angrenzend angeordnet sind. Typischerweise verbleibt im geschlossenen Zustand ein Abstand zwischen dem beweglichen Ende der ersten Ausschleuseeinheit und dem beweglichen Ende der zweiten Ausschleuseeinheit von 5 mm - 50 mm, vorzugsweise 5 mm - 20 mm. Andererseits ist der offene Zustand als der Zustand definiert indem die beiden beweglichen Enden in Richtung des jeweiligen feststehenden oder beweglichen Endes verfahren sind und mit Bezug zueinander am weitesten voneinander entfernt sind.

Alternativ oder ergänzend kann anstelle des feststehenden oder beweglichen Zuführabschnitts und/oder des entlang der Förderrichtung stromabwärts angeordneten feststehenden oder beweglichen Abführabschnitts eine weitere Ausschleusevorrichtung angeordnet sein. So können mehrere Ausschleusevorrichtungen entlang der Förderrichtung in einer Reihe aneinander angrenzend angeordnet sein um mehrere Stückgüter nacheinander ausschleusen zu können.

Typischerweise ist der Zu- und Abführabschnitt als Bandförderer mit einer Bandbreite von 500 mm - 1000 mm ausgeführt. Die zu transportierenden Stückgüter haben vorzugsweise ein Gewicht von 0.5 kg - 25 kg, insbesondere 1 kg - 10 kg. Ein typisches Anwendungsfeld für die Transportvorrichtung ist die Zuförderung von Stückgütern für einen nachgelagerten Bandförderer. In einer bevorzugten Variante kann der Bandförderer Förderschalen mit einer Schalenlänge von im Wesentlichen 500 mm - 1200 mm, bevorzugt von 600 mm - 800 mm aufweisen.

Für diesen Anwendungsfall muss sichergestellt werden, dass die jeweilige Ist-Länge auf dem Abführabschnitt im Wesentlichen der Schalenlänge entspricht. Die Ist-Länge entspricht der effektiven Länge des jeweiligen Stückgutes und dem Ist-Abstand zwischen dem Stückgut und dem stromabwärts nachfolgenden Stückgut. Unterschreitet die Ist-Länge die Soll-Länge, typischerweise die Länge einer Schale eines Schalenförderers, so können ungewollt zwei Stückgüter ganz oder teilweise in einer Schale landen. Überschreitet die Ist-Länge die Soll-Länge werden unter Umständen Schalen leergelassen, was sich negativ auf die Effizienz der Transportvorrichtung auswirkt.

Die Stückgüter werden typischerweise in einem diskontinuierlichen Stückstrom zugeführt. Die zugeführten Stückgüter weisen für gewöhnlich unterschiedliche Abmessungen, sprich Breiten und Längenabmessungen auf. Eine effektive Länge des jeweiligen Stückgutes entspricht hierbei nicht zwangsläufig den Abmessungen, sprich Länge oder Breite, des Stückgutes, sondern je nach Lage auf dem Zuführabschnitt der tatsächlich gemessenen Länge entlang der Förderrichtung. Unter der effektiven Länge ist die entlang der Förderrichtung gemessene Länge des Stückgutes zu verstehen. Im Betrieb kann es vorkommen, dass zwei oder mehr Stückgüter beim Zuführen einander berühren oder sogar teilweise aufeinander liegen. In diesen Fällen soll zumindest eines von den zwei Stückgütern typischerweise ausgeschleust zu werden.

Die erfindungsgemässe Ausschleusevorrichtung ermöglicht es im Gegensatz zu bekannten gattungsgemässen Vorrichtungen zum Ausschleusen von Stückgütern, die zum Beispiel mit Schiebern oder Weichen arbeiten, auch dann gewünschte Stückgüter auszuschleusen, wenn kein Abstand zwischen den angeförderten Stückgütern besteht. So ist es zum Beispiel dank der beiden getrennt voneinander angetriebenen und beweglichen Ausschleuseeinheiten möglich das mittlere von drei direkt aneinanderliegenden Stückgütern auszuschleusen.

Um Stückgüter transportieren zu können und zum Beabstanden der Stückgüter zueinander, umfasst die erste Ausschleuseeinheit ein Förderband und die zweite Ausschleuseeinheit ein Förderband, welche jeweils mittels eines Antriebsmotors antreibbar sind. Das bewegliche Ende der ersten Ausschleuseeinheit und das bewegliche Ende der zweiten Ausschleuseeinheit sind jeweils mittels einer Lineareinheit verfahrbar.

Da das umlaufende Förderband der ersten und der zweiten Ausschleuseeinheit üblicherweise nicht verkürzbar ist, kann zum Verkürzen der ersten und der zweiten Ausschleuseeinheit jeweils eine Umlenkrolle an der jeweiligen Ausschleuseeinheit angeordnet sein, über welche das jeweilige Förderband umläuft. Um die Transportfläche der jeweilige Ausschleuseeinheit entlang der Förderrichtung zu verkürzen, wird die jeweilige Umlenkrolle mit dem darum umlaufenden jeweiligen Förderband in Richtung des jeweiligen feststehenden oder beweglichen Endes verfahren.

Um ein etwaiges Durchhängen des Förderbands beim Verkürzen zu vermeiden, umfasst jede der beiden Ausschleuseeinheiten vorzugsweise noch mindestens eine Gegenrolle, welche ebenfalls verfahren wird. Vorzugsweise sind die jeweilige Umlenkrolle und die Gegenrolle auf einem gemeinsamen Schlitten angeordnet, welcher Schlitten entlang der Förderrichtung verfahrbar an der jeweiligen Ausschleuseeinheit angeordnet ist. Diese Anordnung gewährleistet, dass beim Verfahren des Schlittens die Umlenkrolle und die Gegenrolle jeweils gleich verfahren, wodurch eine einheitliche Spannung des Förderbands im geschlossenen, offenen, sowie in allen Zwischenzuständen ermöglicht wird.

Um einen möglichst hohen Freiheitsgrad der Steuereinheit zu erreichen, weisen die erste und die zweite Ausschleuseeinheit jeweils eine Antriebseinheit zum unabhängigen antreiben der jeweiligen Ausschleuseeinheit auf. Durch ein Auseinanderfahren des beweglichen Endes der ersten Ausschleuseeinheit und des beweglichen Endes der zweiten Ausschleuseeinheit ist eine Lücke generierbar durch welche die Auszuschleusenden Stückgüter aus der Transportvorrichtung ausgeschleust werden. Vorzugsweise fallen die Stückgüter hierbei nach unten aus der Transportvorrichtung heraus.

Das an den feststehenden Zuführabschnitt angrenzend angeordnete feststehende oder bewegliche Ende und das davon stromabwärts angeordnete bewegliche Ende der ersten Ausschleuseeinheit und das der ersten Ausschleuseeinheit stromabwärts benachbart angeordnete bewegliche Ende und das davon stromabwärts an den feststehenden Abführabschnitt angrenzend angeordnete feststehende oder bewegliche Ende der zweiten Ausschleuseeinheit sind dabei vorzugsweise entlang der Förderrichtung beweglich angeordnet. Die beweglichen Enden der jeweiligen Ausschleuseeinheit sind dabei vorzugsweise parallel zur Förderrichtung verfahrbar. Zur Kalibrierung der Ausschleusevorrichtung kann das Band der ersten und/ oder der zweiten Ausschleuseeinheit eine Markierung umfassen, welche mittels eines Kalibrierungssensors erfassbar ist. Alternativ oder ergänzend kann der Antriebsmotor der ersten und/ oder der zweiten Ausschleuseeinheit einen Drehgeber umfassen. Mittels der Markierung und/ oder des Drehgebers kann eine Nullstellung der Ausschleusevorrichtung angefahren werden.

Um Stückgüter mittels der Transportvorrichtung zu transportieren und zu beabstanden werden die Stückgüter mittels des feststehenden oder beweglichen Zuführabschnitts zugeführt. Für das Steuern der Ausschleusevorrichtung, werden die effektive Länge und der jeweilige Ist-Abstand der Stückgüter auf dem feststehenden oder beweglichen Zuführabschnitt entlang der Förderrichtung ermittelt.

Das Ausschleusen mindestens eines Stückguts erfolgt mittels der Ausschleusevorrichtung, wobei das bewegliche Ende der ersten Ausschleuseeinheit in Richtung des feststehenden oder beweglichen Zuführabschnitts verfahren wird, und das bewegliche Ende der zweiten Ausschleuseeinheit in Richtung des feststehenden oder beweglichen Abführabschnitts verfahren wird, wobei das auszuschleusende Stückgut durch eine zwischen der ersten und der zweiten Ausschleuseeinheit erzeugten Lücke aus der Transportvorrichtung ausgeschleust wird. Die verbliebenen Stückgüter werden mittels des feststehenden oder beweglichen Abführabschnitts abgeführt.

Um zu vermeiden, dass neben dem auszuschleusenden Stückgut auch die entlang der Förderrichtung nachfolgenden Stückgüter, welche in der Transportvorrichtung verbleiben sollen, ausgeschleust werden, kann das Förderband der ersten Ausschleuseeinheit abgebremst werden um die vom feststehenden oder beweglichen Zuführabschnitt zugeführten Stückgüter zum Ausschleusen zu verlangsamen, während das bewegliche Ende der ersten Ausschleuseeinheit in Richtung des feststehenden oder beweglichen Zuführabschnitts zurückgefahren wird. Gleichzeitig kann das Förderband der zweiten Ausschleuseeinheit beschleunigt werden um die verbleibenden Stuckgüter zum feststehenden oder beweglichen Abführabschnitt abzuführen während das bewegliche Ende der zweiten Ausschleuseeinheit in Richtung des feststehenden oder beweglichen Abführabschnitts zurückgefahren wird.

Sollte die durch das Ausschleusen eines Stückgutes entstehende Lücke zwischen dem vorlaufenden und dem nachfolgenden Stückgut zu gross werden, so kann die Ausschleusevorrichtung dazu genutzt werden das dem ausgeschleusten Stückgut nachfolgende Stückgut zu beschleunigen um den Abstand zum dem ausgeschleusten Stückgut vorlaufenden Stückgut zu verringern. Das Förderband der ersten Ausschleuseeinheit kann dazu bereits während dem Ausschleusen des Stückgutes beschleunigt werden. Es muss lediglich sichergestellt sein, dass die beweglichen Enden der Ausschleuseeinheit schnell genug auseinandergefahren werden können um das Ausschleusen zu erlauben.

Beim Zusammenfahren der beweglichen Enden nach dem Ausschleusen kann - falls nötig - die Bandgeschwindigkeit weiter erhöht werden um den Abstand zwischen den zwei verbleibenden Stückgütern auf das gewünschte Mass zu reduzieren. Analoges gilt für das Band der zweiten Ausschleuseeinheit, das bei Bedarf zum Verringern des Abstandes nach Übernahme des nachfolgenden Stückgutes ebenfalls noch weiter beschleunigt werden kann.

Sofern der Ist-Abstand zwischen zwei Stückgütern das gewünschte Mass unterschreitet, die Ist-Abstände der den beiden Stückgütern vorlaufenden und nachfolgenden Stückgütern aber gross genug sind um eine Korrektur auf den gewünschten Ist-Abstand der beiden Stückgüter zu ermöglichen, so kann diese Korrektur ohne ein Ausschleussen nur durch die gezielte Beschleunigung des vorlaufenden der beiden Stückgüter und Verlangsamung des Nachlaufenden Stückguts erfolgen.

Ist der Ist-Abstand zwischen zwei Stückgütern zu gross, so kann er mittels der erfindungsgemässen Ausschleusevorrichtung in umgekehrter Weise auch Verringert werden.

Um basierend auf dem zeitlichen Eintreffen der jeweiligen Stückgüter auf dem Zuführabschnitt die beiden Ausschleuseeinheiten zeitlich akkurat steuern zu können, kann die Transportvorrichtung mindestens einen Sensor und eine mit dem Sensor kommunikativ verbundene Steuereinheit umfassen, wobei die Steuereinheit dazu konfiguriert ist das Beschleunigen und/ oder Abbremsen und das Auseinanderfahren der ersten und der zweiten Ausschleuseeinheit anzusteuern. Der Sensor ist hierbei vorzugsweise an dem feststehenden oder beweglichen Zuführabschnitt angeordnet und dazu konfiguriert die jeweilige effektive Länge der Stückgüter entlang der Förderrichtung und den Ist-Abstand zwischen einem vorauslaufenden und einem stromabwärts entlang der Förderrichtung nachfolgenden Stückgut zu detektieren.

Basierend auf dem jeweiligen Ist-Abstand zwischen den Stückgütern kann mittels der Steuereinheit berechnet werden, ob eines oder mehrere der zugeführten Stückgüter ausgeschleust werden soll. Hierzu ist der Sensor dazu konfiguriert die Abmessungen der Stückgüter und die jeweilige Lage der Stückgüter zueinander auf dem feststehenden oder beweglichen Zuführabschnitt zu detektieren. Typischerweise ist der Sensor eine Lichtschranke, ein Lichtgitter, ein Lasergitter oder eine Kamera.

Um den Zeitpunkt des Auseinanderfahrens der ersten und der zweiten Ausschleuseeinheit akkurat anzusteuern ist der mindestens eine Sensor dazu konfiguriert an die mit dem mindestens einen Sensor kommunikativ verbundene Steuereinheit Daten zu senden.

Der mindestens eine Sensor ist typischerweise dazu eingerichtet die effektive Länge eines Stückguts auf dem Zuführabschnitt zu erfassen. Einzelne Stückgüter werden üblicherweise bei zu kleinem Ist-Abstand zwischen den Stückgütern ausgeschleust werden.

In einer Variante kann der Sensor auch aneinander angrenzend angeordnete oder aufeinander angeordnete Stückgüter erkennen.

In einer Variante kann mindestens ein Kontrollsensor im Bereich des beweglichen Endes der ersten und/oder der zweiten Ausschleuseeinheit angeordnet sein, der dazu konfiguriert ist die Ausschleusung zu überwachen indem er zum Beispiel Stückgüter detektiert, welche zwischen der ersten und der zweiten Ausschleuseeinheit verklemmt sind oder aus einem anderen Grund diesen Bereich blockieren.

Der Kontrollsensor kann gemäss weiterer Ausführungsformen ein optischer Sensor sein, der zusätzlich zur Überwachung der Ausschleusung auch noch die Anzahl der ausgeschleusten Stückgüter und weiter bevorzugt einen Barcode oder einen QR-Code am auszuschleusenden Stückgut erfassen kann. Im einfachsten Fall kann dadurch das Ermitteln der Anzahl der ausgeschleusten Stückgüter die Anzahl der verbleibenden Stückgüter von der Steuereinheit korrigiert werden.

Bei einer individuellen Kennzeichnung der Stückgüter mit einem Barcode, einem QR-Code oder einem anderen optisch auslesbaren Code kann der entsprechend ausgestaltete Kontrollsensor zudem das ausgeschleuste Stückgut erfassen, identifizieren und diese Information an die Steuereinheit weitergeben.

Sind die Stückgüter mit einem RFID Etikett oder einem anderen elektronisch auslesbaren Etikett versehen, so kann dies auch genutzt werden um mittels eines zusätzlichen Kontrollsensor das ausgeschleuste Stückgut zu identifizieren.

Die Steuereinheit ist dazu konfiguriert basierend auf den Daten den jeweiligen Antriebsmotor zu steuern um das jeweilige Förderband zu beschleunigen und/ oder abzubremsen. Neben dem Ansteuern des jeweiligen Antriebsmotors um die Geschwindigkeit zu steuern kann die Steuereinheit auch die jeweiligen beweglichen Enden ansteuern. Basierend auf der effektiven Länge der Stückgüter kann die Steuereinheit basierend auf der jeweiligen effektiven Länge die Lineareinheiten derart steuern, dass zwischen dem beweglichen Ende der ersten Ausschleuseeinheit und dem beweglichen Ende der zweiten Ausschleuseeinheit eine Lücke generierbar ist, die weit genug ist das auszuschleusende Stückgut auszuschleusen.

Der Vorteil einer auf die effektive Länge des Stückgutes abgestimmten Lücke besteht darin, dass die beweglichen Enden der jeweiligen Ausschleuseeinheit nur so weit auseinandergefahren werden, dass das auszuschleusende Stückgut ausgeschleust werden kann. Dies ermöglicht es, dass die beweglichen Enden anschliessend schneller zusammengefahren werden können, als wenn die beweglichen Enden bei jedem Stückgut bis in die offene Stellung aufgefahren werden. Unter der Endstellung ist hierbei die Stellung der beiden beweglichen Enden zu verstehen, in welcher diese bis an das jeweilige feste Ende herangefahren sind.

Aufgrund des unterschiedlichen Beschleunigens des jeweiligen Förderbands der ersten und der zweiten Ausschleuseeinheit weist bei der Übergabe von der zweiten Ausschleuseeinheit an den feststehenden oder beweglichen Abführabschnitt das Stückgut gegenüber dem jeweils stromaufwärts darauffolgenden Stückgut einen grösseren Ist-Abstand auf, als der Ist-Abstand bei der Übergabe vom feststehenden oder beweglichen Zuführabschnitt an die erste Ausschleuseeinheit. Basierend auf der vom Sensor erfassten jeweiligen Lage der Stückgüter auf dem feststehenden oder beweglichen Zuführabschnitt und mittels der vom Sensor übertragenen Daten kann die Steuereinheit den Antriebsmotor der ersten Ausschleuseeinheit steuern. Die Steuereinheit kann den Antriebsmotor derart steuern, dass die erste Ausschleuseeinheit zum Ausschleusen des auszuschleusenden Stückguts abgebaremst wird. Alternativ oder ergänzend kann die Steuereinheit mittels der vom Sensor übertragenen Daten die jeweilige Lineareinheit derart ansteuern, dass die erste und die zweite Ausschleuseeinheit zum Ausschleusen derart schnell verfahren werden, dass das auszuschleusende Stückgut aufgrund seiner Masse schwerkraftgetrieben durch die entstehende Lücke nach unten herausfällt.

Neben den steuerbaren Ausschleuseelementen der Ausschleusevorrichtung kann der Strom der Stückgüter zusätzlich noch über den feststehenden oder beweglichen Zu- und/ oder Abführabschnitt beeinflusst werden. So kann über eine Geschwindigkeitsdifferenz des Abführabschnittes gegenüber dem Zuführabschnitt ein weiteres Beabstanden oder Verkürzen des Abstands erreicht werden. Hierzu sind der feststehende oder bewegliche Zuführabschnitt und/ oder der feststehende oder bewegliche Abführabschnitt vorzugsweise als Bandförderer mit einer definierten Fördergeschwindigkeit ausgeführt.

Um einen einfachen und kostengünstigen Aufbau der Transportvorrichtung zu erreichen, kann der feststehende oder bewegliche Zuführabschnitt und/oder der feststehende oder bewegliche Abführabschnitt auch als Rollenförderer oder Rutsche ausgeführt sein oder diese umfassen.

Um neben dem reinen Ausschleusen auch ein Sortieren der ausgeschleusten Stückgüter zu ermöglichen, wird eine Sortieranlage zum Transport und Sortieren von Stückgütern bereitgestellt. Die Sortieranlage umfasst mindestens eine Transportvorrichtung, welche je nach Ausgestaltung einen feststehenden Zuführabschnitt und einen entlang einer Förderrichtung stromabwärts angeordneten feststehenden Abführabschnitt aufweist. Alternativ kann anstelle eines feststehenden Zuführ- und Abführabschnitts auch stromaufwärts und/oder stromabwärts eine weitere Transportvorrichtung angeordnet sein. In einer Variante umfasst die Sortieranlage eine Mehrzahl an in Förderrichtung in einer Reihe aneinander angrenzend angeordneten Transportvorrichtungen.

Die Transportvorrichtung umfasst eine Ausschleusevorrichtung, welche eine erste und eine zweite Ausschleuseeinheit umfasst. Die erste und die zweite Ausschleuseeinheit definieren jeweils eine Transportfläche, wobei die erste Ausschleuseeinheit ein feststehendes oder bewegliches Ende (erstes Ende)und ein davon stromabwärts angeordnetes bewegliches Ende (zweites Ende)aufweist, und die zweite Ausschleuseeinheit ein der ersten Ausschleuseeinheit stromabwärts benachbart angeordnetes bewegliches Ende (erstes Ende) und ein davon stromabwärts angeordnetes feststehendes oder bewegliches Ende (zweites Ende)aufweist.

Die erste und die zweite Ausschleuseeinheit weisen jeweils eine Antriebseinheit zum unabhängigen Antreiben der jeweiligen Ausschleuseeinheit auf. Durch ein Verfahren eines beweglichen Endes der ersten Ausschleuseeinheit und eines beweglichen Endes der zweiten Ausschleuseeinheit ist eine Lücke generierbar, durch welche auszuschleusende Stückgüter aus der Transportvorrichtung ausgeschleust werden. Vorzugsweise fällt das Stückgut beim Ausschleusen mit Bezug zu den Transportflächen nach unten aus der Transportvorrichtung heraus. Das ausgeschleuste Stückgut kommt auf der Sortiervorrichtung zu liegen und/oder wird von der Sortiervorrichtung in mindestens einen Auffangbehälter sortiert.

Um die ausgeschleusten Stückgüter zu sortieren, umfasst die Sortieranlage ferner eine Sortiervorrichtung zum Sortieren des ausgeschleusten Stückguts. Die Sortiervorrichtung umfasst mindestens ein bewegliches Sortierelement und mindestens einen Auffangbehälter. Um einen möglichst kompakten Aufbau zu erzielen, kann der mindestens eine Auffangbehälter unter der Transportvorrichtung angeordnet sein. Im Gegensatz zu den aus dem Stand der Technik bekannten Sortieranlagen wird der mindestens eine Auffangbehälter nicht neben den Förderbändern der ersten und der zweiten Ausschleuseeinheit angeordnet, sondern kann darunter angeordnet sein.

Die Transportvorrichtung kann entweder zum reinen Beabstanden und Ausschleusen von Stückgütern und/oder zur Verwendung in einer Sortieranlage verwendet werden. Bei der Verwendung zum Transport und zum Beabstanden von Stückgütern umfasst das Verfahren typischerweise die folgenden Schritte. Nach dem Zuführen der Stückgüter mittels des feststehenden Zuführabschnitts oder einer vorgeschalteten Transportvorrichtung, kann eine effektive Länge und/ oder des Ist-Abstands der Stückgüter auf dem feststehenden Zuführabschnitt oder der vorgeschalteten Transportvorrichtung ermittelt werden. Das Ausschleusen mindestens eines Stückguts mittels der Ausschleusevorrichtung kann bei einer zu grossen Abweichung der Ist-Länge von einer Soll-Länge erfolgen. Hierzu kann das bewegliche Ende der ersten Ausschleuseeinheit in Richtung des feststehenden Zuführabschnitts oder der vorgeschalteten Transportvorrichtung verfahren werden, und das bewegliche Ende der zweiten Ausschleuseeinheit in Richtung des feststehenden Abführabschnitts oder einer nachgeschalteten Transportvorrichtung verfahren werden. Das auszuschleusende Stückgut kann durch eine hierdurch zwischen der ersten und der zweiten Ausschleuseeinheit erzeugten Lücke (6) aus der Transportvorrichtung ausgeschleust werden und das verbliebenen Stückguts mittels des feststehenden Abführabschnitts abgeführt werden.

Vorzugsweise wird das Förderband der ersten Ausschleuseeinheit abgebremst um die vom feststehenden Zuführabschnitt zugeführten Stückgüter zum Ausschleusen zu verlangsamen und das bewegliche Ende der ersten Ausschleuseeinheit wird in Richtung des feststehenden Zuführabschnitts oder der vorgeschalteten Transportvorrichtung zurückgefahren. Gleichzeitig kann das Förderband der zweiten Ausschleuseeinheit beschleunigt werden um die verbleibenden Stuckgüter zum feststehenden Abführabschnitt abzuführen und das bewegliche Ende der zweiten Ausschleuseeinheit in Richtung des feststehenden Abführabschnitts oder der nachgeschalteten Transportvorrichtung zurückgefahren werden.

Die Transportvorrichtung kann einzeln zwischen einem feststehenden Zu- und Abführabschnitt oder mehreren in einer Reihe aneinander angrenzend angeordneten Transportvorrichtungen angeordnet sein um Stückgut zu Beabstanden und Auszusortieren oder in Kombination mit einer Sortiervorrichtung eine Sortieranlage bilden. Mehrere Sortieranlagen welche entlang der Förderrichtung in einer Reihe aneinander angrenzend angeordnet sind, können unabhängig voneinander angesteuert und geöffnet werden. Die in der Sortieranlage angeordnete Sortiervorrichtung kann mehrstufig ausgeführt sein. So können mehrere bewegliche Sortierelement bezüglich der Förderrichtung nebeneinander und/oder übereinander angeordnet sein um ein mehrstufiges Sortieren zu ermöglichen.

Um das ausgeschleuste Stückgut in mindestens einen Auffangbehälter unterhalb der Transportflächen zu sortieren, weist das mindestens eine bewegliche Sortierelement eine Kante auf. Die Kante des mindestens einen beweglichen Sortierelements ist bezüglich eines unterhalb der Transportflächen angeordneten Scheitelpunktes auf einer geradlinigen oder bogenförmigen Bahn von einer ersten Position in eine zweite Position bringbar, um das Stückgut mit Bezug zur Förderrichtung zu einer der Seiten in mindestens einen Auffangbehälter einzusortieren. Die Kante erstreckt sich vorzugsweise im Wesentlichen parallel zur Förderrichtung und ist ebenfalls unterhalb der Transportflächen angeordnet.

Die erfindungsgemässe Sortiervorrichtung kann auch losgelöst von der Sortieranlage und von der Transportvorrichtung verwendet werden.

In einer Variante können mindestens zwei Warenströme parallel zueinander entlang der Förderrichtung mittels der Transportvorrichtung transportiert werden. Bevorzugt werden die Stückgüter der mindestens zwei Warenströme dabei bezüglich der Förderrichtung zueinander versetzt transportiert. Durch den versetzten Transport zweier Warenströme zueinander können zwischen 40 % bis zu 60% mehr Stückgüter pro Zeiteinheit transportiert, ausgeschleust und sortiert werden als bei nur einem einzelnen Warenstrom.

In einer Variante kann das bewegliche Sortierelement als Sortierband ausgeführt sein, welches in Blickrichtung der Förderrichtung dreiecksförmig aufgespannt ist. Da das Sortierband typischerweise über Rollen oder Walzen umläuft, handelt es sich im strengen Sinne um kein geometrisch korrektes Dreieck. Da es im Wesentlichen jedoch einer Dreiecksform entspricht, wird der Einfachheit halber im Folgenden von einem Dreieck gesprochen. Die Schenkel des Dreiecks bilden hierbei vorzugsweise Rutschflächen für die zu Sortierenden Stückgüter. Unter Blickrichtung ist hierbei eine Richtung entlang der Förderrichtung zu verstehen.

Bei einem gedanklichen Schnitt durch die Sortieranlage, senkrecht zur Förderrichtung, ensteht eine Schnittebene.

In einer Variante spannt das durch die Schnittebene geschnittene Sortierband in der Schnittebene ein Dreieck auf. Das Sortierband läuft vorzugsweise um mindestens drei Rollen oder Walzen um, wobei mindestens eine der Rollen oder Walzen auf der geradlinigen oder bogenförmigen Bahn von einer ersten Position in eine zweite Position verfahrbar ist.

Vorzugsweise werden die Walzen mittels eines Hebels von der einen in die andere Position (von der ersten in die zweite oder umgekehrt) verfahren, wobei die jeweiligen Enden der Rolle oder Walze hierbei in einer Führung oder Kulisse geführt werden.

Um den Längenausgleich des Sortierbands herzustellen, kann mindestens eine der Rollen oder Walzen auf einer bogenförmigen Bahn von der ersten Position in die zweite Position verfahren werden. Alternativ kann das Band auch derart dehnbar ausgestaltet sein, dass die mindestens eine Rollen oder Walze auf einer geradlinigen Bahn von der ersten Position in die zweite Position verfahrbar ist und der Längenausgleich durch eine Dehnung des Sortierbandes erfolgt.

Durch das Bewegen einer der Kanten bezüglich des Scheitelpunkts von der ersten Position in die zweite Position oder umgekehrt, von der zweiten Position in die erste Position, kann einstellbar sein zu welcher Seite das Stückgut über eine der Rutschflächen sortiert wird. Das Sortierband selbst kann antreibbar sein, alternativ läuft es lediglich um die Rollen oder Walzen um, ist jedoch nicht angetrieben. Im Falle, dass das Sortierband nicht angetrieben ist, rutscht das ausgeschleuste Stückgut über das Sortierband herunter und fällt in mindestens einen Auffangbehälter.

Es wird typischerweise zumindest ein Auffangbehälter benötigt, in den vorzugsweise räumlich getrennt sortiert werden kann. So kann mindestens ein Auffangbehälter mittels einer Trennwand unterteilt sein. Alternativ können mindestens zwei Auffangbehälter nebeneinander angeordnet sein.

Im Falle, dass das Sortierband antreibbar ist, wird das ausgeschleuste Stückgut aktiv mittels des Sortierbands in den mindestens einen Auffangbehälter befördert. Um zu bestimmen, in welchen Abschnitt des mindestens einen Auffangbehälters oder alternativ in welchen der mindestens zwei Auffangbehälter das ausgeschleuste Stückgut sortiert wird, kann durch das Bewegen einer der Rollen oder Walzen bezüglich des Scheitelpunkts von der ersten Position in die zweite Position, je nach Ausgestaltung auf einer geradlinigen oder bogenförmigen Bahn oder alternativ im Wesentlichen parallel zu der Grundseite des Dreiecks, gesteuert werden, zu welcher Seite das Stückgut sortiert wird.

Durch das Verfahren von mindestens einer der Rollen oder Walzen bezüglich des Scheitelpunkts können die Winkel der Schenkel verändert und hierdurch die Neigung der Rutschflächen gesteuert werden. Das Dreieck ist hierbei in Blickrichtung der Förderrichtung vorzugsweise derart angeordnet, dass die Grundseite unterhalb und vorzugsweise im Wesentlichen parallel zu den Transportflächen angeordnet ist und die Rolle oder Walze, welche die Spitze des Dreiecks bildet, oberhalb der Grundseite, jedoch ebenfalls unterhalb der Transportflächen angeordnet ist. Um einen besonders platzsparenden Aufbau zu erreichen, können die mindestens zwei Auffangbehälter angrenzend aneinander angeordnet sein, ohne dass eine Lücke zwischen den Auffangbehälter verbleibt.

Alternativ kann das bewegliche Sortierelement in Blickrichtung der Förderrichtung als verschwenkbares Prisma ausgeführt sein. Das Prisma kann zum Sortieren des Stückguts bezüglich des Scheitelpunktes verschwenkbar sein um das Stückgut in einen Abschnitt des mindestens einen Auffangbehälters oder alternativ in einen der mindestens zwei Auffangbehälter zu sortieren. In einer Variante ist das Prisma als Dreieck, vorzugsweise als gleichseitiges Dreieck, ausgeführt. Die Seitenflächen des Dreiecks stellen hierbei Rutschflächen dar. Um einen besonders zeitsparenden und zielgenauen Sortierprozess zu erreichen, kann das Prisma zeitgleich zum Ausschleusevorgang verschwenkt werden. Hierbei wird das nach unten aus der Ausschleusevorrichtung herausfallende Stückgut durch das verschwenkende Prisma erfasst, rutscht über die jeweilige Rutschfläche herab und wird zusätzlich durch die Schwenkbewegung beschleunigt und in einen der mindestens zwei Auffangbehälter geschleudert. In einer Variante bildet die Schenkelfläche nur eine Rutschfläche aus, das zu sortierende Stückgut rutscht hierbei schwerkraftgetrieben herab und fällt in den mindestens einen Auffangbehälter.

In einer Variante ist das verschwenkbare Prisma zum Sortieren des Stückguts um einen Drehpunkt verdrehbar angeordnet. Das Prisma kann hierbei zwischen der ersten Position und der zweiten Position hin- und hergeschwenkt werden. Alternativ kann das Prisma auch um den Drehpunkt gedreht werden wobei die Kanten des Prismas auf einer Kreisbahn umlaufen und bei jedem Ausschleusevorgang mindestens eine der Kanten den Scheitelpunkt durchläuft.

Alternativ kann das bewegliche Sortierelement als Wippe ausgeführt sein, welche beim Ausschleusen des Stückguts bezüglich des Scheitelpunktes verschwenkbar ist um das Stückut in einen der mindestens zwei Auffangbehälter zu sortieren. Die Wippe kann hierbei bezüglich eines Drehpunktes verschwenkt werden, welcher vorzugsweise unterhalb des Scheitelpunktes angeordnet ist.

Um einen besonders zeitsparenden und zielgenauen Sortierprozess zu erreichen, kann die Wippe zeitgleich zum Ausschleusevorgang verschwenkt werden. Hierbei wird das nach unten aus der Ausschleusevorrichtung herausfallende Stückgut durch die zwischen der ersten Position und der zweiten Position verschwenkbare Wippe erfasst, rutscht über eine der Rutschflächen der Wippe herab und kann zusätzlich durch die Schwenkbewegung der Wippe beschleunigt und in einen der mindestens zwei Auffangbehälter geschleudert werden.

Die Wippe ist vorzugsweise um den Drehpunkt drehend von der ersten Position in die zweite Position verschwenkbar, wobei eine erste Kante der Wippe beim Verschwenken von der ersten Position in die zweite Position oder umgekehrt von der zweiten Position in die erste Position den Scheitelpunkt überquert.

Die diversen Varianten des beweglichen Sortierelements können allesamt derart ausgestaltet sein, dass die mindestens eine Kante des beweglichen Sortierelements auf dem Weg von der ersten Position in die zweite Position oder von der zweiten Position in die erste Position den Scheitelpunkt durchläuft.

Beim Verfahren zum Transport und Sortieren von Stückgut werden die Stückgüter auf die Sortieranlage vorzugsweise mittels des feststehenden Zuführabschnitts oder einer vorgelagerten Transportvorrichtung zugeführt.

Optional kann die jeweilige effektive Länge und/ oder der Ist-Abstands der Stückgüter ermittelt werden und mindestens ein Stückgut mittels der Ausschleusevorrichtung ausgeschleust werden. Ein bewegliches Ende der ersten Ausschleuseeinheit kann entlang der Förderrichtung, vorzugsweise in Richtung des feststehenden Zuführabschnitts oder einer vorgelagerten Transportvorrichtung, verfahren werden. Ein bewegliches Ende der zweiten Ausschleuseeinheit kann entlang der Förderrichtung, vorzugsweise in Richtung des feststehenden Abführabschnitts oder einer nachgelagerten Transportvorrichtung verfahren werden. Das auszuschleusende Stückgut wird durch eine zwischen der ersten und der zweiten Ausschleuseeinheit erzeugten Lücke, vorzugsweise nach unten, aus der Transportvorrichtung ausgeschleust.

Zum Sortieren des ausgeschleusten Stückguts wird eine Kante des mindestens einen beweglichen Sortierelements bezüglich eines unterhalb der Transportflächen angeordneten Scheitelpunktes auf einer geradlinigen oder bogenförmigen Bahn von einer ersten Position in eine zweite Position gebracht, um das Stückgut mit Bezug zur Förderrichtung zu einer der Seiten in einen der mindestens zwei Auffangbehälter zu sortieren. Die auf der Transportvorrichtung verbliebenen und nicht ausgeschleusten Stückgüter werden abgeführt.

Beim Ausschleusen fällt das Stückgut mit Bezug zu den Transportflächen vorzugsweise nach unten aus der Sortieranlage heraus. In einer Variante ist das bewegliche Sortierelement als Sortierband ausgeführt, welches in Blickrichtung der Förderrichtung ein Dreieck aufspannt, dessen Schenkel Rutschflächen bilden. In dieser Variante kann die Rolle oder Walze des Dreiecks bezüglich des Scheitelpunkts von der ersten Position in die zweite Position, vorzugsweise im Wesentlichen parallel zu der Grundseite des Dreiecks, bewegt werden um einzustellen, zu welcher Seite das Stückgut sortiert wird. Die Rolle oder Walze kann bezüglich des Scheitelpunkts seitlich bewegt werden um den jeweiligen Winkel der Schenkel und hierdurch die Neigung der Rutschflächen einzustellen. Das Stückgut kann nach dem Ausschleusen über ein Herunterrutschen auf einer der Rutschflächen in einen der mindestens zwei Auffangbehälter sortiert werden.

In einer Variante kann das bewegliche Sortierelement in Blickrichtung der Förderrichtung als verschwenkbares Prisma ausgeführt sein, welches zum Sortieren des Stückguts bezüglich des Scheitelpunktes verschwenkt wird um das Stückgut in eine der mindestens zwei Auffangbehälter zu sortieren.

In einer alternativen Variante kann das bewegliche Sortierelement als Wippe ausgeführt sein, welche beim Ausschleusen des Stückguts bezüglich des Scheitelpunktes verschwenkt wird um das Stückut in eine der mindestens zwei Auffangbehälter zu sortieren.

Die beschriebenen Ausführungsformen und Varianten der Sortieranlage, beziehungsweise der Transportvorrichtung und der Ausschleusevorrichtung können zur Ausführung des erfindungsgemässen Verfahrens dienen. Die zuvor beschriebenen Ausführungsformen und Varianten des Verfahrens offenbaren zugleich entsprechend ausgestaltete Ausführungen und Varianten der Anlage und Vorrichtungen zur Durchführung des Verfahrens und umgekehrt.

### LISTE DER FIGUREN

Anhand der in den nachfolgenden Figuren gezeigten Ausführungsbeispiele und der dazugehörigen Beschreibung werden Aspekte der Erfindung näher erläutert. Es zeigen:
- Fig. 1: Eine Seitenansicht einer ersten Variante der Transportvorrichtung in einem geschlossenen Zustand;
- Fig. 2: Eine Seitenansicht der Variante der Transportvorrichtung nach Figur 1 in einem Zustand beim Auseinanderfahren des beweglichen Endes der ersten Ausschleuseeinheit und des beweglichen Endes der zweiten Ausschleuseeinheit;
- Fig. 3: Eine Seitenansicht der Variante der Transportvorrichtung nach Figur 1 in einem geöffneten Zustand;
- Fig. 4: Eine Seitenansicht der Variante der Transportvorrichtung nach Figur 1 in einem Zustand beim Zusammenfahren des beweglichen Endes der ersten Ausschleuseeinheit und des beweglichen Endes der zweiten Ausschleuseeinheit;
- Fig. 5: Eine Draufsicht auf eine Variante des feststehenden Zuführabschnitts mit darauf liegenden zugeführten Stückgütern;
- Fig. 6: Eine Seitenansicht auf die Variante des feststehenden Zuführabschnitts nach Figur 5 mit darauf liegenden zugeführten Stückgütern.
- Fig. 7: Eine Seitenansicht einer ersten Variante einer Sortieranlage mit einer Transportvorrichtung und einer Sortiervorrichtung;
- Fig. 8: Eine Seitenansicht der Sortieranlage nach Figur 7 mit einer Mehrzahl von Transportvorrichtungen und Sortiervorrichtungen;
- Fig. 9: Eine Draufsicht auf die Sortieranlage nach Figur 7 mit einer Mehrzahl von Transportvorrichtungen und Sortiervorrichtungen;
- Fig. 10: Eine Schnittansicht der Sortieranlage entlang der Förderrichtung nach Figur 7;
- Fig. 11: Eine Schnittansicht einer zweiten Variante einer Sortieranlage entlang der Förderrichtung mit einer Transportvorrichtung und einer Sortiervorrichtung;
- Fig. 12: Eine Schnittansicht einer dritten Variante einer Sortieranlage entlang der Förderrichtung mit einer Transportvorrichtung und einer Sortiervorrichtung;
- Fig. 13: Eine Schnittansicht einer vierten Variante einer Sortieranlage entlang der Förderrichtung mit einer Transportvorrichtung und einer Sortiervorrichtung;
- Fig. 14: Eine Schnittansicht einer fünften Variante einer Sortieranlage entlang der Förderrichtung mit einer Transportvorrichtung und einer Sortiervorrichtung;
- Fig. 15: Eine Schnittansicht einer sechsten Variante einer Sortieranlage entlang der Förderrichtung mit einer Transportvorrichtung und einer Sortiervorrichtung;
- Fig. 16: Eine Schnittansicht einer siebten Variante einer Sortieranlage entlang der Förderrichtung mit einer Transportvorrichtung und einer Sortiervorrichtung.

### BESCHREIBUNG DER AUSFÜHRUNGSVRIANTEN

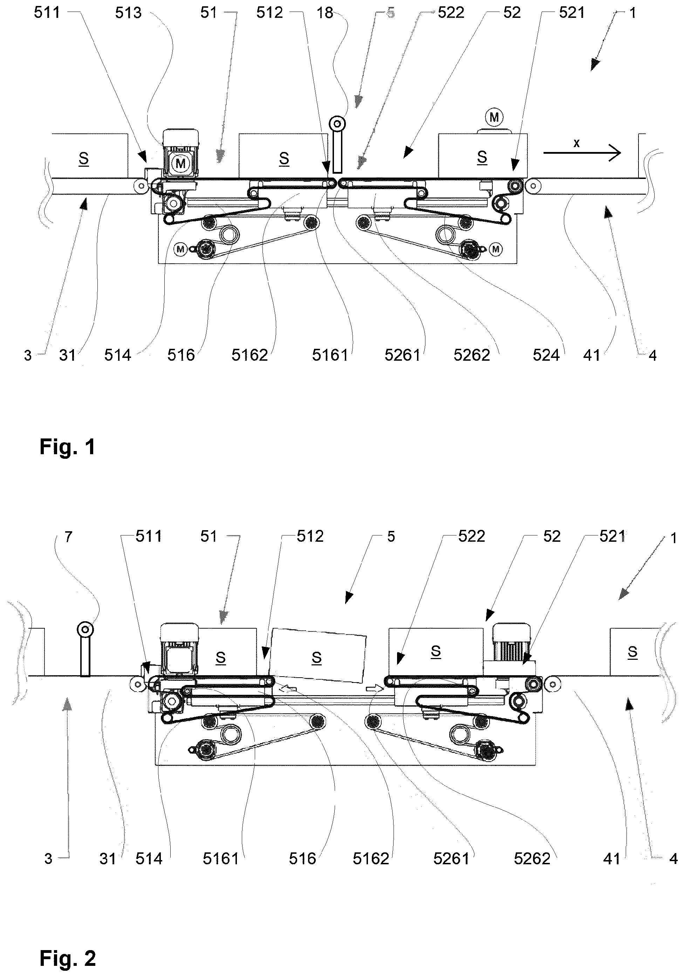

Wie aus den **Figuren 1** bis **4** ersichtlich ist, umfasst die Transportvorrichtung 1 zum Transport von Stückgütern S, einen feststehenden Zuführabschnitt 3 und einen entlang einer Förderrichtung x stromabwärts angeordneten feststehenden Abführabschnitt 4, und eine Ausschleusevorrichtung 5 umfassend eine erste 51 und eine zweite 52 Ausschleuseeinheit. Die Ausschleusevorrichtung 5 ist entlang der Förderrichtung x zwischen dem feststehenden Zuführabschnitt 3 und dem feststehenden Abführabschnitt 4 angeordnet.

Die erste Ausschleuseeinheit 51 weist ein an den feststehenden Zuführabschnitt 3 angrenzend angeordnetes feststehendes oder bewegliches Ende 511 und ein davon stromabwärts angeordnetes bewegliches Ende 512 auf. Die zweite Ausschleuseeinheit 52 weist ein der ersten Ausschleuseeinheit 51 stromabwärts benachbart angeordnetes bewegliches Ende 522 und ein davon stromabwärts an den feststehenden Abführabschnitt 4 angrenzend angeordnetes feststehendes oder bewegliches Ende 521 auf.

Die erste 51 und die zweite 52 Ausschleuseeinheit weisen jeweils eine Antriebseinheit 513, 523 zum unabhängigen antreiben der jeweiligen Ausschleuseeinheit 51, 52 auf. Durch ein Auseinanderfahren des beweglichen Endes 512 der ersten Ausschleuseeinheit 51 und des beweglichen Endes 522 der zweiten Ausschleuseeinheit 52 eine Lücke 6 generierbar ist, durch welche die Auszuschleusenden Stückgüter S nach unten aus der Transportvorrichtung 1 herausfallen.

Die gezeigte Transportvorrichtung 1 eignet sich für ein Verfahren zum Transport und zum Beabstanden von Stückgütern S. Wie in allen Figuren ersichtlich ist, werden die Stückgüter S mittels des feststehenden Zuführabschnitts 3 zugeführt. Auf dem Zuführabschnitt 3 werden die Lagen und die Abmessungen der Stückgüter S mittels eines Sensors 7 auf dem feststehenden Zuführabschnitt 3 erfasst.

Wie aus den **Figuren 1** bis **4** ersichtlich ist, umfasst die erste Ausschleuseeinheit 51 ein Förderband 514 und die zweite Ausschleuseeinheit 52 ebenfalls ein Förderband 524, welche jeweils mittels des jeweiligen Antriebsmotors 513, 523 antreibbar sind. Das bewegliche Ende 512 der ersten Ausschleuseeinheit 51 und das bewegliche Ende 522 der zweiten Ausschleuseeinheit 52 sind jeweils mittels einer Lineareinheit 515, 525 verfahrbar angeordnet.

Da das jeweilige Förderband 514, 524 der ersten 51 und der zweiten 52 Ausschleuseeinheit umlaufend und üblicherweise nicht verkürzbar ist, ist zum Verkürzen der ersten 51 und der zweiten 52 Ausschleuseeinheit in der gezeigten Ausführungsvariante jeweils eine Umlenkrolle 5161, 5261 an der jeweiligen Ausschleuseeinheit 51, 52 angeordnet. Das jeweilige Förderband 514, 524 läuft dabei um die Umlenkrolle 5161, 5261 um.

Um die jeweilige Ausschleuseeinheit 51, 52 zu verkürzen, wird die jeweilige Umlenkrolle 5161, 5261 mit dem darum umlaufenden jeweiligen Förderband 514, 524 verfahren. Um nun ein etwaiges Durchhängen des jeweiligen Förderbands 514, 524 zu vermeiden, umfasst jede der beiden Ausschleuseeinheiten 51, 52 vorzugsweise noch mindestens eine Gegenrolle 5162, 5262, welche ebenfalls verfahrbar angeordnet ist. Vorzugsweise sind die jeweilige Umlenkrolle 5161, 5261 und die jeweilige Gegenrolle 5162, 5262 jeweils auf einem gemeinsamen Schlitten 516, 526 angeordnet. Die Schlitten 516, 526 sind hierbei vorzugsweise entlang der Förderrichtung verfahrbar an der jeweiligen Ausschleuseeinheit 51, 52 angeordnet.

Zum Erfassen der Lage und Ausmessungen der Stückgüter S, sowie deren Lage auf dem Zuführabschnitt 3 umfasst die gezeigte Variante der Transportvorrichtung 1 mindestens einen Sensor 7 und eine mit dem Sensor 7 kommunikativ verbundene Steuereinheit 900. Der Sensor 7 ist dazu konfiguriert die Abmessungen der Stückgüter S und die jeweilige Lage der Stückgüter S zueinander auf dem feststehenden Vorzugsweise ist der Sensor 7 eine Lichtschranke, ein Lichtgitter, ein Lasergitter oder eine Kamera.

Die Steuereinheit 900 ist dazu konfiguriert das Beschleunigen und/ oder Abbremsen und das Auseinanderfahren der ersten 51 und der zweiten 52 Ausschleuseeinheit anzusteuern. Ein guter Stückgutstrom kann erreicht werden, wenn der feststehende Zuführabschnitt 3 und/ oder der feststehende Abführabschnitt 4 als Bandförderer 31, 41 mit einer regelbaren Fördergeschwindigkeit ausgeführt ist. Somit kann neben dem Ausschleusen mittels der Ausschleusevorrichtung 5 zusätzlich auch noch mit dem Zuführ- 3 und Abführabschnitt 4 Einfluss auf den Ist-Abstand der Stückgüter S zueinander genommen werden.

Wie am besten aus **Figur 2** ersichtlich ist, wird zum Ausschleusen mindestens eines Stückguts S das bewegliche Ende 512 der ersten Ausschleuseeinheit 51 in Richtung des feststehenden Zuführabschnitts 3 verfahren und das bewegliche Ende 522 der zweiten Ausschleuseeinheit 52 in Richtung des feststehenden Abführabschnitts 4 verfahren. Gute Resultate können erzielt werden, wenn das Förderband 514 der ersten Ausschleuseeinheit 51 abgebremst wird um die vom feststehenden Zuführabschnitt 3 zugeführten Stückgüter S zum Ausschleusen zu verlangsamen während das bewegliche Ende 512 der ersten Ausschleuseeinheit 51 in Richtung des feststehenden Zuführabschnitts 3 zurückgefahren wird. Gleichzeitig wird das Förderband 524 der zweiten Ausschleuseeinheit 52 beschleunigt um die verbleibenden Stuckgüter 2 zum feststehenden Abführabschnitt 4 abzuführen während das bewegliche Ende 522 der zweiten Ausschleuseeinheit 52 in Richtung des feststehenden Abführabschnitts 4 zurückgefahren wird.

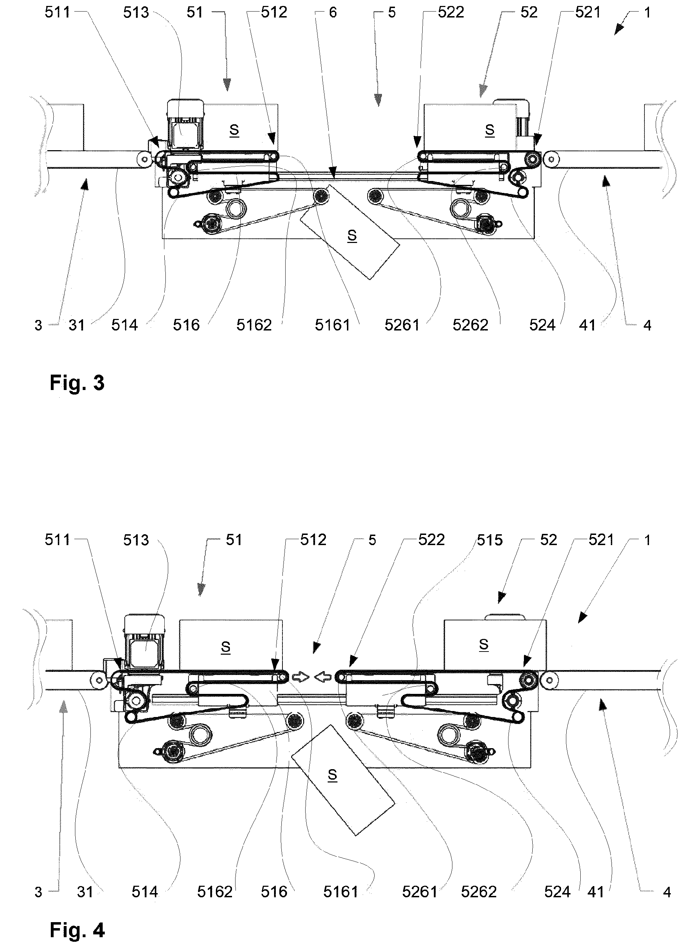

Wie am besten aus **Figur 3** ersichtlich ist, fällt das auszuschleusende Stückgut S durch eine zwischen der ersten 51 und der zweiten 52 Ausschleuseeinheit erzeugte Lücke 6 nach unten aus der Transportvorrichtung 1 heraus. Bei dem in **Figur 4** gezeigten Zufahren des beweglichen Endes 512 der ersten Ausschleuseeinheit 51 und des beweglichen Endes 522 der zweiten Ausschleuseeinheit 52 werden die verbliebenen Stückgüter S mittels des feststehenden Abführabschnitts 4 abgeführt.

Der mindestens eine Sensor 7, welcher kommunikativ mit der Steuereinheit 900 verbunden ist sendet an diese Daten, wobei die Steuereinheit 900 dazu konfiguriert ist basierend auf den Daten den jeweiligen Antriebsmotor 513, 523 zu steuern um das jeweilige Förderband 514, 524 zu beschleunigen und/ oder abzubremsen. Der gezeigte Sensor 7 ist typischerweise dazu konfiguriert die jeweilige effektive Länge der Stückgüter S sowie die jeweilige Lage der Stückgüter S auf dem feststehenden Zuführabschnitt 3 in Förderrichtung zu erfassen und die Steuereinheit 900 basierend auf der jeweiligen effektiven Länge die Lineareinheiten 515, 525 derart zu steuern, dass zwischen dem beweglichen Ende 512 der ersten Ausschleuseeinheit 51 und dem beweglichen Ende 522 der zweiten Ausschleuseeinheit 52 eine Lücke 6 generierbar ist, welche von der Grösse her das Ausschleusen des Stückguts S erlaubt. Weiterhin kann der Sensor 7 dazu konfiguriert sein die jeweilige Lage der Stückgüter S auf dem feststehenden Zuführabschnitt 3 zu erfassen und die Steuereinheit 900 mittels der vom Sensor übertragenen Daten den Antriebsmotor 523 der zweiten Ausschleuseeinheit 52 derart zu beschleunigen, dass die Stückgüter S beabstandet werden und bei der Übergabe von der zweiten Ausschleuseeinheit 52 an den feststehenden Abführabschnitt 4 gegenüber dem jeweils stromaufwärts darauffolgenden Stückgut S einen grösseren Ist-Abstand aufweisen, als der Ist-Abstand bei der Übergabe vom feststehenden Zuführabschnitt 3 an die erste Ausschleuseeinheit 51.

Gute Resultate können erzielt werden, wenn der Sensor 7 dazu konfiguriert ist die jeweilige Lage der Stückgüter S auf dem feststehenden Zuführabschnitt 3 zu erfassen und die Steuereinheit 900 mittels der vom Sensor 7 übertragenen Daten den Antriebsmotor 513 der ersten Ausschleuseeinheit 51 derart zu steuern, dass die erste Ausschleuseeinheit 51 zum Ausschleusen des auszuschleusenden Stückguts S abgebremst wird. Weiterhin kann die Steuereinheit 900 mittels der vom Sensor 7 übertragenen Daten die jeweilige Lineareinheit 515, 525 derart ansteuert, dass die erste 51 und die zweite 52 Ausschleuseeinheit zum Ausschleusen derart schnell verfahren werden, dass das auszuschleusende Stückgut S aufgrund seiner Masse schwerkraftgetrieben durch die entstehende Lücke 6 nach unten herausfällt.

In der Ausführungsform gemäss **Figur 1** ist ein Kontrollsensor 18 im Bereich des beweglichen Endes 522 der zweiten Ausschleuseeinheit 52 angeordnet, der in den weiteren Figuren nicht mehr dargestellt ist. Der Kontrollsensor 18 ist dazu konfiguriert die Ausschleusung zu überwachen indem er zum Beispiel Stückgüter detektiert, welche zwischen den beweglichen Enden 512, 522 der ersten und der zweiten Ausschleuseeinheiten 51, 52 verklemmt sind oder aus einem anderen Grund diesen Bereich blockieren. Dies könnte zum Beispiel der Fall sein, falls die bereits ausgeschleusten Stückgüter nicht abtransportiert wurden und sich unterhalb der beweglichen Enden stapeln.

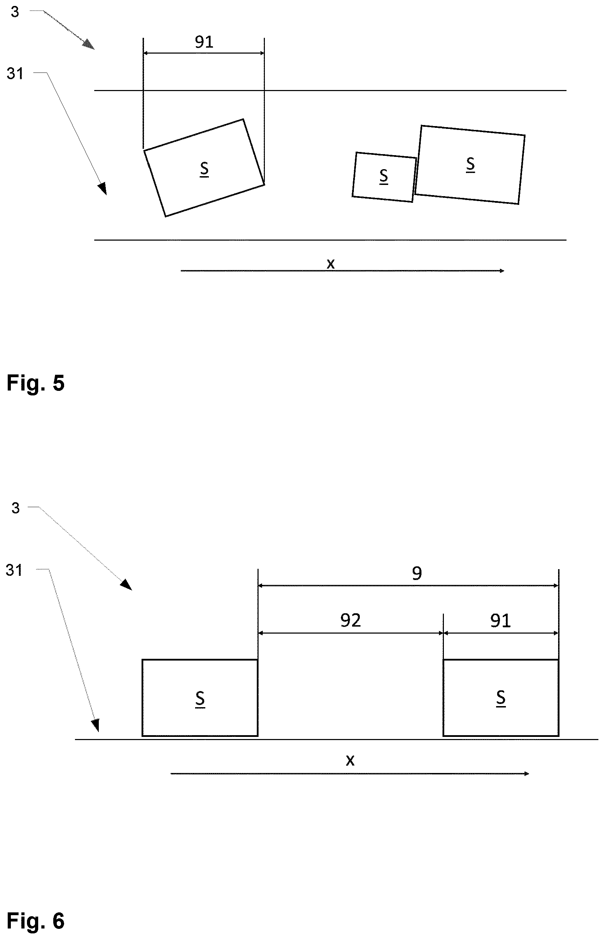

Wie aus **Figuren 5** und **6** ersichtlich ist, werden die Stückgüter S typischerweise in einem diskontinuierlichen Stückstrom zugeführt. Die zugeführten Stückgüter weisen für gewöhnlich unterschiedliche Abmessungen, wie Breiten- und Längenabmessungen auf.

Wie aus **Figur 5** ersichtlich ist, entspricht die effektive Länge 91 des jeweiligen Stückgutes S nicht den eigentlichen Abmessungen, wie Länge oder Breite, sondern je nach Lage auf dem Zuführabschnitt 3 der tatsächlich gemessenen Länge entlang der Förderrichtung x. Unter der effektiven Länge 91 ist die entlang der Förderrichtung x gemessene Länge des Stückgutes zu verstehen. Wie weiterhin aus Figur 5 ersichtlich ist, können zwei oder mehrere Stückgüter auch einander angrenzend, oder aufeinanderliegend zugeführt werden. In einer bevorzugten Variante der Transportvorrichtung ist der Sensor 7 derart konfiguriert, dass zwei aneinandergrenzend zugeführte Stückgüter erkannt werden um eine Ausschleusung zu veranlassen.

Wie aus **Figur 6** ersichtlich ist, ist in der gezeigten Variante der Transportvorrichtung 1 durch den Sensor 7 eine Ist-Länge 9 detektierbar, welche der effektiven Länge 91 des jeweiligen Stückgutes S und dem Ist-Abstand 92 zwischen dem Stückgut S und dem stromabwärts nachfolgenden Stückgut S entspricht. Ist der Transportvorrichtung beispielsweise ein Schalenförderer nachgelagert, so sollte die Ist-Länge 9 im Wesentlichen der Länge einer Förderschale unddes Abstands zwischen zwei aufeinanderfolgenden Förderschalen entsprechen.

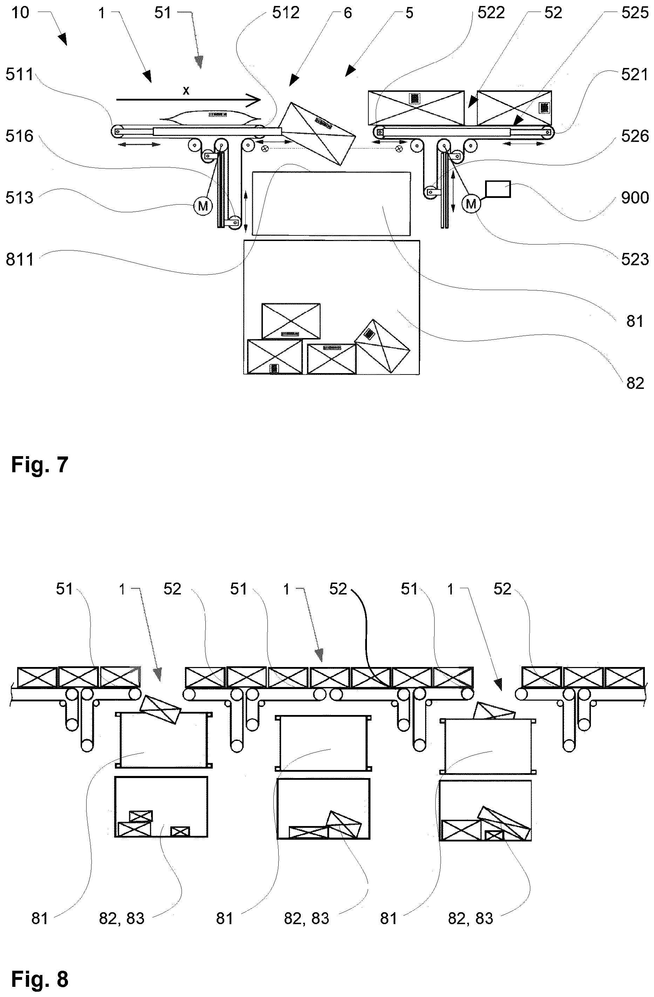

Wie aus **Figur 7** und **8** ersichtlich ist, weisst die gezeigte Ausführungsform der Sortieranlage 10 zum Transport und Sortieren von Stückgütern S mindestens eine Transportvorrichtung 1 und eine Sortiervorrichtung 8 auf, um neben dem reinen Ausschleusen auch ein Sortieren der ausgeschleusten Stückgüter S zu ermöglichen.

Die gezeigte Sortieranlage 10 weisst anstelle eines feststehenden Zuführabschnitts und Abführabschnitts auch stromaufwärts und/oder stromabwärts eine weitere Transportvorrichtung 1 auf. In der gezeigten Variante weisst die Sortieranlage 10 eine Mehrzahl an in Förderrichtung x in einer Reihe aneinander angrenzend angeordneten Transportvorrichtungen 1 auf.

Die gezeigte Transportvorrichtung 1 umfasst eine Ausschleusevorrichtung 5, welche eine erste 51 und eine zweite 52 Ausschleuseeinheit umfasst. Die erste 51 und die zweite 52 Ausschleuseeinheit definieren jeweils eine Transportfläche 515, 525 wobei die erste 51 Ausschleuseeinheit in der gezeigten Variante ein erstes bewegliches Ende 511 und ein davon stromabwärts angeordnetes zweites bewegliches Ende 512 aufweist.

Wie insbesondere aus **Figur 7** zu erkennen ist, sind das erste 511 und das zweite 512 bewegliche Ende mittels einer Lineareinheit entlang der Förderrichtung x verfahrbar angeordnet. Der beim Auseinanderfahren der beweglichen Enden 512, 522 entstehende jeweilige Leertrum der Förderbänder 514, 524, kann mittels Spannrollen 516, 526 unterhalb der Transportflächen 515, 525 gespannt werden, indem die Spannrollen 516, 526 mit Bezug zur jeweiligen Transportfläche 515, 525 senkrecht verfahren werden. Die Spannrollen 516, 526 können hierbei mittels Antriebsmotoren verfahren werden, welche über eine Steuereinheit 900 steuerbar sind. Die erste 51 und die zweite 52 Ausschleuseeinheit weisen in der gezeigten Variante jeweils eine Antriebseinheit 513, 523 zum unabhängigen Antreiben der jeweiligen Ausschleuseeinheit 51, 52 auf. Wie in den Figuren ersichtlich, wird durch ein Auseinanderfahren des beweglichen Endes 512 der ersten Ausschleuseeinheit 51 und des beweglichen Endes 522 der zweiten Ausschleuseeinheit 52 eine Lücke 6 generiert, durch welche auszuschleusende Stückgüter S in der gezeigten Variante nach unten aus der Transportvorrichtung 1 ausgeschleust werden. Vorzugsweise fällt das Stückgut S beim Ausschleusen mit Bezug zu den Transportflächen 515, 525 nach unten aus der Transportvorrichtung 1 heraus und landet auf dem unterhalb der Transportflächen 515, 525 angeordneten beweglichen Sortierelement 81 der Sortiervorrichtung 8 und wird mittels des beweglichen Sortierelements 81 in mindestens einen Auffangbehälter 82, 83 einsortiert..

Die gezeigte Sortieranlage 10 weist ferner eine Sortiervorrichtung 8 zum Sortieren des ausgeschleusten Stückguts S auf. Die gezeigte Sortiervorrichtung 8 umfasst ein bewegliches Sortierelement 81 und mindestens zwei Auffangbehälter 82, 83. Um einen möglichst kompakten Aufbau zu erzielen, können die mindestens zwei Auffangbehälter 82, 83 unter der Transportvorrichtung 1 angeordnet sein. Die gezeigten zwei Auffangbehälter 82, 83 sind hierbei nicht neben der ersten 51 und der zweiten 52 Ausschleuseeinheit angeordnet, sondern darunter angeordnet.

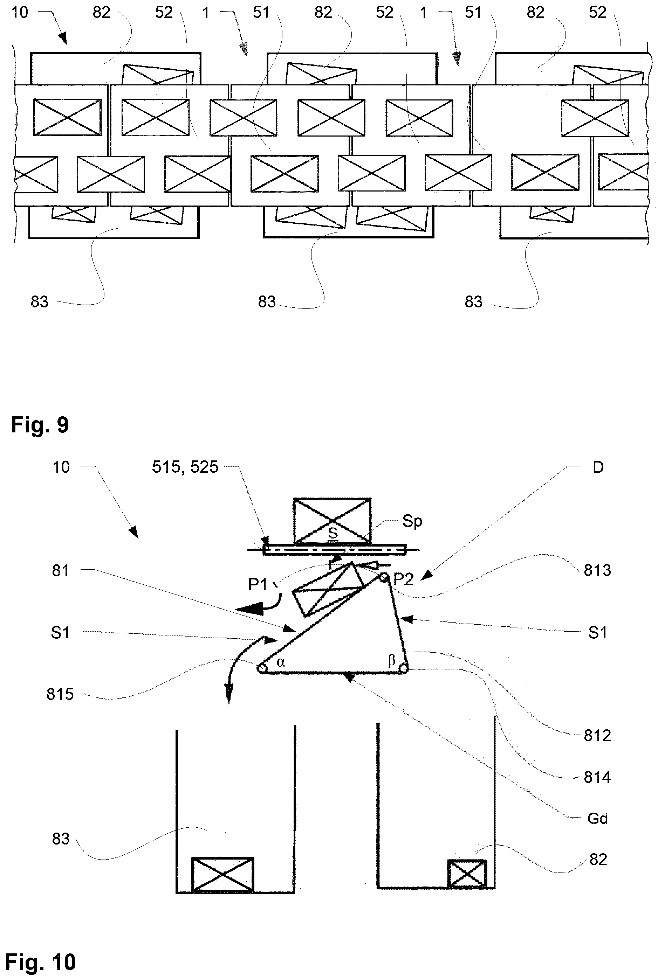

**Figur 9** zeigt eine Draufsicht auf die Sortieranlage 10 mit einer Mehrzahl an Transportvorrichtungen 1 und Sortiervorrichtungen. Wie aus der Figur 9 ersichtlich ist, können mindestens zwei Warenströme parallel zueinander transportiert werden. Bevorzugt werden die Warenströme, bestehend aus einer Mehrzahl an Stückgütern, wie in der gezeigten Variante dabei entlang der Förderrichtung x zueinander versetzt transportiert. Durch den versetzten Transport zueinander können bei gleicher Fördergeschwindigkeit zwischen 40 % bis zu 60% mehr Stückgüter S transportiert, ausgeschleust und sortiert werden.

Wie aus den **Figuren 10** bis **16** ersichtlich, weist das mindestens eine bewegliche Sortierelement 81 der Sortiervorrichtung 8 eine Kante auf 811 um das ausgeschleuste Stückgut S zwischen den mindestens zwei Auffangbehältern 82, 83 unterhalb der Transportflächen 515, 525 zu sortieren. Die Kante 811 des mindestens einen beweglichen Sortierelements 81 ist bezüglich eines unterhalb der Transportflächen 515, 525 angeordneten Scheitelpunktes SP auf einer bogenförmigen Bahn von einer ersten Position P1 in eine zweite Position P2 bringbar, um das Stückgut S mit Bezug zur Förderrichtung x zu einer der Seiten in einen der mindestens zwei Auffangbehälter 82, 83 zu sortieren. Die Kante 811 erstreckt sich vorzugsweise im Wesentlichen parallel zur Förderrichtung x und ist ebenfalls unterhalb der Transportflächen 515, 525 angeordnet.

**Figur 10** zeigt eine Variante der Sortieranlage 10 in welcher das bewegliche Sortierelement 81 der Sortiervorrichtung 8 als Sortierband 812 ausgeführt ist, welches in Blickrichtung der Förderrichtung x ein Dreieck D aufspannt, dessen Schenkel S1, S2 Rutschflächen bilden. Das Sortierband 812 läuft in der gezeigten Variante um mindestens drei Rollen 813, 814, 815 um, wobei eine der Rollen 813 auf der bogenförmigen Bahn B von der ersten Position P1 in die zweite Position P2 verfahrbar angeordnet ist. Das Sortierband 812 selbst ist in der gezeigten Variante nicht antreibbar. Das ausgeschleuste Stückgut S rutscht über das Sortierband 812 herunter und fällt in einen der zwei Auffangbehälter 82, 83. Um zu bestimmen, in welchen der zwei Auffangbehälter 82, 83 das ausgeschleuste Stückgut S sortiert wird, wird die oberste Rolle oder Walze 813 des Dreiecks D bezüglich des Scheitelpunkts SP von der ersten Position P1 in die zweite Position P2 oder umgekehrt bewegt.

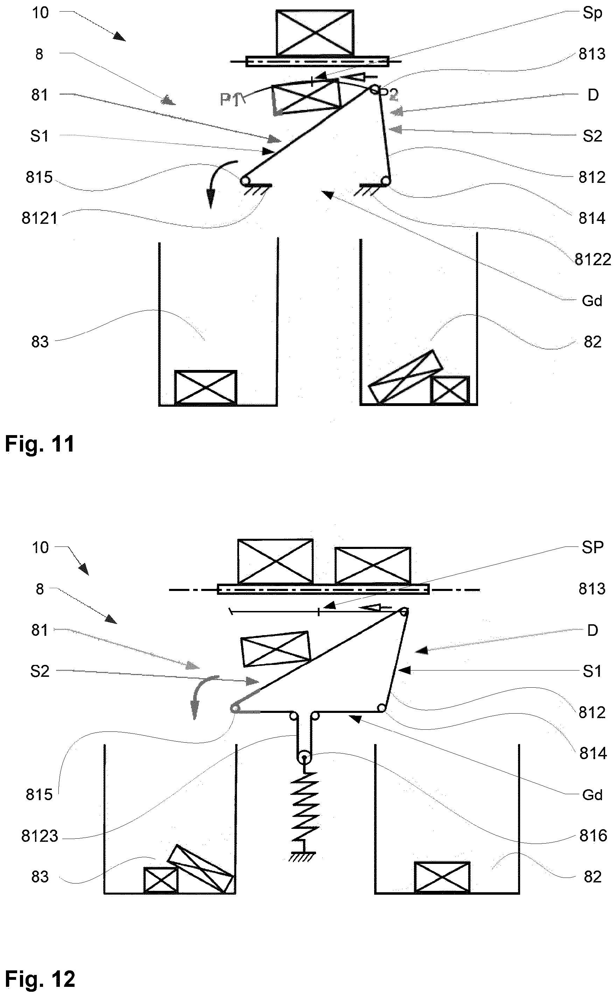

**Figur 11** zeigt eine zweite Variante der Sortieranlage 10 in welcher das bewegliche Sortierelement 81 der Sortiervorrichtung 8 als Sortierband 812 ausgeführt ist. Das Sortierband 812 der Förderrichtung x spannt ebenfalls ein Dreieck D auf, dessen Schenkel S1, S2 Rutschflächen bilden.

Das Sortierband 812 läuft in der gezeigten Variante ebenfalls um drei Rollen 813, 814, 815 um, wobei jedoch nur eine der Rollen 813 auf der bogenförmigen Bahn B von der ersten Position P1 in die zweite Position P2 verfahrbar angeordnet ist.

Die übrigen Rollen 814, 815 sind feststehend angeordnet. Ebenfalls ist das Sortierband 812 an zwei Enden 8121, 8122 fest eingespannt und daher fixiert. Die Längenänderung des Sortierbands 812 beim Bewegen der obersten Rolle oder Walze 813 entlang der bogenförmigen Bahn B wird in der gezeigten Variante lediglich über eine elastische und daher reversible Dehnung des Sortierbands 812 realisiert. Da das Sortierband 812 in der gezeigten Variante nicht antreibbar ist, rutscht das ausgeschleuste Stückgut S über das Sortierband 812 herunter und fällt in einen der zwei Auffangbehälter 82, 83.

Um zu bestimmen, in welchen der zwei Auffangbehälter 82, 83 das ausgeschleuste Stückgut S sortiert wird, wird auch hier die oberste Rolle oder Walze 813 des Dreiecks D bezüglich des Scheitelpunkts SP von der ersten Position P1 in die zweite Position P2 bewegt.

**Figur 12** zeigt eine dritte Variante der Sortieranlage 10 in welcher das bewegliche Sortierelement 81 der Sortiervorrichtung 8 als Sortierband 812 ausgeführt ist. Das Sortierband 812 spannt in Blickrichtung der Förderrichtung x ein Dreieck D auf, dessen Schenkel S1, S2 Rutschflächen bilden. Das Sortierband 812 läuft in der gezeigten Variante um mindestens drei Rollen 813, 814, 815 um, wobei eine der Rollen 813 auf der bogenförmigen Bahn B von der ersten Position P1 in die zweite Position P2 verfahrbar angeordnet ist. Das Sortierband 812 selbst ist in der gezeigten Variante ebenfalls nicht antreibbar wird jedoch mittels mindestens einer zusätzlichen Spannrolle 816 gespannt. Hierbei wird der Leertrum 8123 gespannt, indem die mindestens eine Spannrolle 816 senkrecht verfahren wird.

Das ausgeschleuste Stückgut S rutscht über das Sortierband 812 herunter und fällt in einen der zwei Auffangbehälter 82, 83. Um zu bestimmen, in welchen der zwei Auffangbehälter 82, 83 das ausgeschleuste Stückgut S sortiert wird, wird die oberste Rolle oder Walze 813 des Dreiecks D bezüglich des Scheitelpunkts SP von der ersten Position P1 in die zweite Position P2 bewegt. Die oberste Rolle oder Walze 813 wird hierbei ebenfalls auf der bogenförmigen Bahn B im Wesentlichen parallel zu der Grundseite GD des Dreiecks D bewegt. Über das Bewegen der obersten Rolle oder Walze 813 in einer der beiden Positionen P1, P2 wird gesteuert zu welcher Seite das Stückgut S sortiert wird.

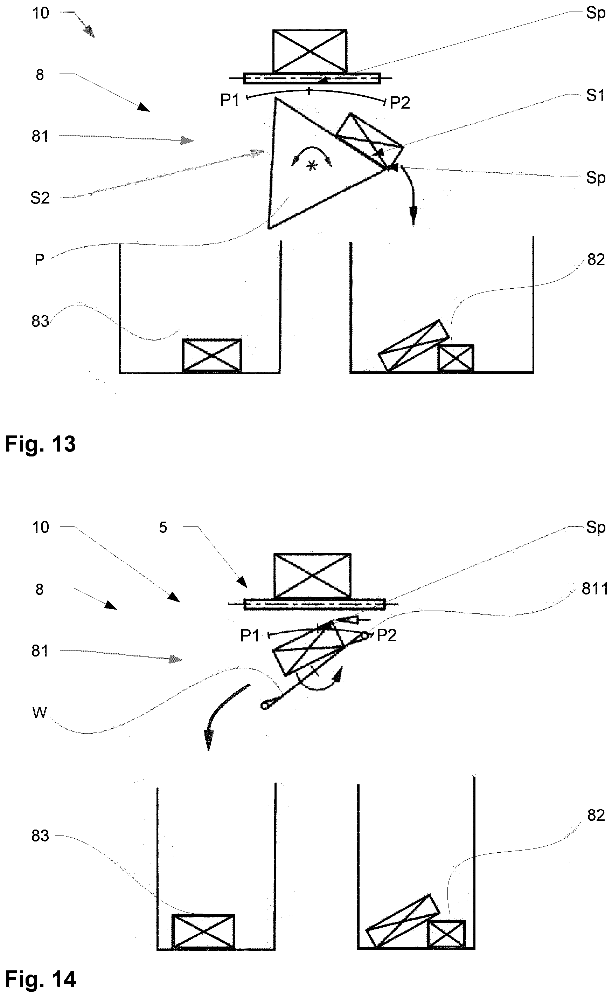

**Figur 13** zeigt eine vierte Variante der Sortieranlage 10 bei welcher das bewegliche Sortierelement 81 der Sortiervorrichtung 8 in Blickrichtung der Förderrichtung x als verschwenkbares Prisma P ausgeführt ist. Das gezeigte Prisma P wird zum Sortieren des Stückguts S bezüglich des Scheitelpunktes SP verschwenkt um das Stückgut S in eine der mindestens zwei Auffangbehälter 82, 83 zu sortieren.

In der gezeigten Variante ist das Prisma P als Dreieck, vorzugsweise als gleichseitiges Dreieck, ausgeführt. Die Seitenflächen S1, S2 des Dreiecks D stellen hierbei Rutschflächen dar. Um einen besonders zeitsparenden und zielgenauen Sortierprozess zu erreichen, kann das Prisma P zeitgleich zum Ausschleusevorgang verschwenkt werden. Hierbei wird das nach unten aus der Ausschleusevorrichtung 5 herausfallende Stückgut S durch das verschwenkende Prisma P erfasst, rutscht über die jeweilige Rutschfläche herab und kann zusätzlich durch die Schwenkbewegung beschleunigt und in einen der mindestens zwei Auffangbehälter 82, 83 geschleudert werden.

**Figur 14** zeigt eine fünfte Variante der Sortieranlage 10 bei welcher das bewegliche Sortierelement 81 der Sortiervorrichtung 8 als Wippe W ausgeführt ist. Die gezeigte Wippe W wird beim Ausschleusen des Stückguts S bezüglich des Scheitelpunktes SP verschwenkt um das Stückgut S in eine der mindestens zwei Auffangbehälter 82, 83 zu sortieren. Die Wippe W wird hierbei bezüglich eines Drehpunktes DP verschwenkt, welcher vorzugsweise unterhalb des Scheitelpunktes SP angeordnet ist. Um einen besonders zeitsparenden und zielgenauen Sortierprozess zu erreichen, kann die Wippe W zeitgleich zum Ausschleusevorgang verschwenkt werden. Hierbei wird das nach unten aus der Ausschleusevorrichtung 5 herausfallende Stückgut S durch die zwischen der ersten Position P1 und der zweiten Position P2 verschwenkenden Wippe W erfasst, rutscht über die Rutschfläche der Wippe W herab und wird zusätzlich durch die Schwenkbewegung der Wippe W beschleunigt und in einen der mindestens zwei Auffangbehälter 82, 83 geschleudert.

Die Wippe W ist vorzugsweise um den Drehpunkt DP drehend von der ersten Position P1 in die zweite Position P2 verschwenkbar, wobei eine erste Kante 811 der Wippe W beim Verschwenken von der ersten Position P1 in die zweite Position P2 den Scheitelpunkt SP überquert.

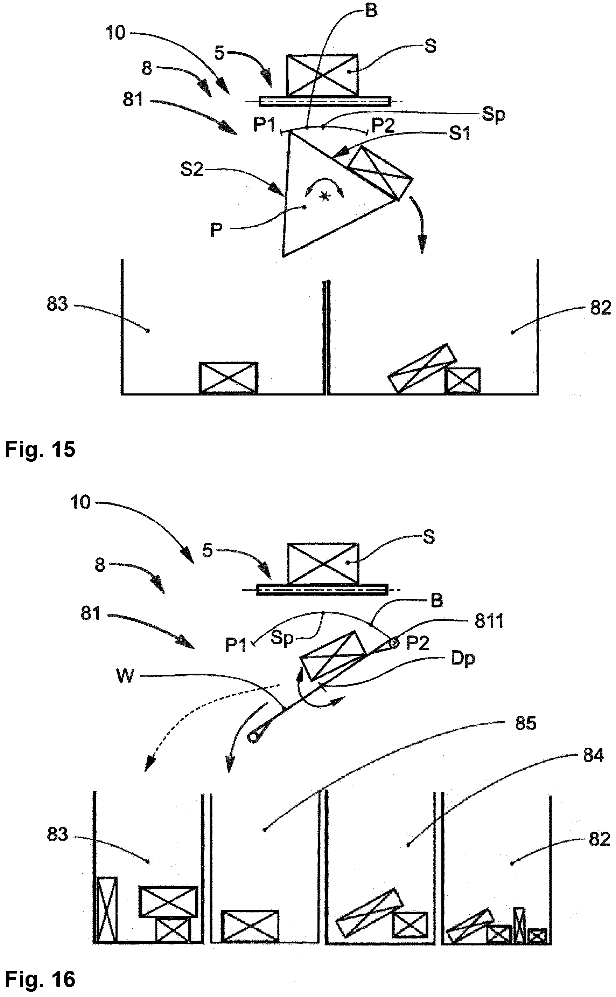

**Figur 15** zeigt eine sechste Variante der Sortieranlage 10 bei welcher das bewegliche Sortierelement 81 der Sortiervorrichtung 8 in Blickrichtung der Förderrichtung x als verschwenkbares Prisma P ausgeführt ist, ähnlich der vierten Ausführungsform. Das gezeigte Prisma P wird zum Sortieren des Stückguts S bezüglich des Scheitelpunktes SP verschwenkt um das Stückgut S in eine der mindestens zwei Auffangbehälter 82, 83 zu sortieren.

In der gezeigten Variante ist das Prisma als gleichseitiges Dreieck ausgeführt.

Im Unterscheid zur vierten Variante sind die mindestens zwei Auffangbehälter 82, 83 angrenzend aneinander und unterhalb der Transportvorrichtung 1 angeordnet um einen sehr platzsparendend Aufbau zu erreichen. Um dennoch einen zielgenauen Sortierprozess zu erreichen, wird das Prisma P zeitgleich zum Ausschleusevorgang verschwenkt, jedoch wird es nicht zusätzlich durch die Schwenkbewegung beschleunigt um das Stückgut S nicht über einen der mindestens zwei Auffangbehälter 82, 83 hinauszuschleudern.

**Figur 16** zeigt eine siebte Variante der Sortieranlage 10 bei welcher das bewegliche Sortierelement 81 der Sortiervorrichtung 8 als Wippe W ausgeführt ist. Die gezeigte Wippe W wird beim Ausschleusen des Stückguts S bezüglich des Scheitelpunktes SP verschwenkt um das Stückgut S in eine der mindestens zwei Auffangbehälter 82, 83, 84, 85 zu sortieren. Die gezeigte Sortiervorrichtung umfasst insgesamt vier Auffangbehälter 82, 83, 84, 85.

Das nach unten aus der Ausschleusevorrichtung 5 herausfallende Stückgut S wird durch die zwischen der ersten Position P1 und der zweiten Position P2 verschwenkenden Wippe W erfasst, rutscht jedoch nicht nur über die Rutschfläche der Wippe W herab sondern wird zusätzlich durch die Schwenkbewegung der Wippe W beschleunigt und zielgenau in einen der vier Auffangbehälter 82, 83, 84, 85 geschleudert.

Die Wippe W ist um den Drehpunkt DP drehend von der ersten Position P1 in die zweite Position P2 verschwenkbar, wobei eine erste Kante 811 der Wippe W beim Verschwenken von der ersten Position P1 in die zweite Position P2 den Scheitelpunkt SP überquert.

## Patentansprüche

1. Transportvorrichtung (1) zum Transport von Stückgütern (S), umfassend
a. einen feststehenden Zuführabschnitt (3) und einen entlang einer Förderrichtung (x) stromabwärts angeordneten feststehenden Abführabschnitt (4), und
b. eine Ausschleusevorrichtung (5) umfassend eine erste (51) und eine zweite (52) Ausschleuseeinheit, welche entlang der Förderrichtung (x) zwischen dem feststehenden Zuführabschnitt (3) und dem feststehenden Abführabschnitt (4) angeordnet sind, wobei
i. die erste Ausschleuseeinheit (51) ein an den feststehenden Zuführabschnitt (3) angrenzend angeordnetes feststehendes oder bewegliches Ende (511) und ein davon stromabwärts angeordnetes bewegliches Ende (512) aufweist, und
ii. die zweite Ausschleuseeinheit (52) ein der ersten Ausschleuseeinheit (51) stromabwärts benachbart angeordnetes bewegliches Ende (522) und ein davon stromabwärts an den feststehenden Abführabschnitt (4) angrenzend angeordnetes feststehendes oder bewegliches Ende (521) aufweist, wobei
c. die erste (51) und die zweite (52) Ausschleuseeinheit jeweils eine Antriebseinheit (513, 523) zum unabhängigen Antreiben der jeweiligen Ausschleuseeinheit (51, 52) aufweisen und durch ein Auseinanderfahren des beweglichen Endes (512) der ersten Ausschleuseeinheit (51) und des beweglichen Endes (522) der zweiten Ausschleuseeinheit (52), sodass eine Lücke (6) generierbar ist, durch welche auszuschleusende Stückgüter (S) aus der Transportvorrichtung (1) ausgeschleust werden,
**dadurch gekennzeichnet, dass** die erste Ausschleuseeinheit (51) und die zweite Ausschleuseeinheit (52) jeweils ein mittels eines eigenen Antriebsmotors (513, 523) antreibbares Förderband (514, 524) umfassen, welche jeweils eine Transportfläche (515, 525) definieren, wobei beim Verfahren eines beweglichen Endes (511, 512, 521, 522) ein jeweiliger Leertrum (5141, 5142, 5241, 5242) der Förderbänder (514, 524) mittels eines Spannelements (516, 517, 526, 527) unterhalb der Transportflächen (515, 525) spannbar ist, indem das Spannelement (516, 517, 526, 527) mit Bezug zur jeweiligen Transportfläche (515, 525) mit einem Winkel von 30° bis 90° verfahrbar ist.

2. Transportvorrichtung (1) nach Anspruch 1, **dadurch gekennzeichnet, dass** die Transportvorrichtung (1) mindestens einen Sensor (7) und eine mit dem Sensor (7) kommunikativ verbundene Steuereinheit (900) umfasst, wobei die Steuereinheit (900) dazu konfiguriert ist das Beschleunigen und/ oder Abbremsen und das Auseinanderfahren der ersten (51) und der zweiten (52) Ausschleuseeinheit zu steuern, wobei der Sensor (7) vorzugsweise dazu konfiguriert ist die Abmessungen der Stückgüter (S) und die jeweilige Lage der Stückgüter (S) zueinander auf dem feststehenden Zuführabschnitt (3) zu detektieren, wobei der Sensor (7) vorzugsweise eine Lichtschranke, ein Lichtgitter, ein Lasergitter oder eine Kamera umfasst.

3. Sortieranlage (10) zum Transport und Sortieren von Stückgütern (S) umfassend,
a. mindestens eine Transportvorrichtung (1) gemäss einem der vorhergehenden Ansprüche, und
b. eine Sortiervorrichtung (8) zum Sortieren des ausgeschleusten Stückguts (S), umfassend
i. mindestens ein bewegliches Sortierelement (81) und mindestens einen Auffangbehälter (82, 83, 84, 85), wobei das mindestens eine bewegliche Sortierelement (81) und der mindestens eine Auffangbehälter (82, 83, 84, 85) unterhalb der Transportflächen (515, 525) angeordnet sind und wobei
ii. mindestens eine Kante (811) des mindestens einen beweglichen Sortierelements (81) bezüglich eines unterhalb der Transportflächen (515, 525) angeordneten Scheitelpunktes (SP) auf einer geradlinigen oder bogenförmigen Bahn (B), von einer ersten Position (P1) in eine zweite Position (P2) bringbar ist um das Stückgut (S) mit Bezug zur Förderrichtung (x) zu einer der Seiten in den mindestens einen Auffangbehälter (82, 83, 84, 85) zu sortieren.

4. Sortieranlage (10) nach Anspruch 3, **dadurch gekennzeichnet, dass** das bewegliche Sortierelement (81) ein Sortierband (812) umfasst, welches in Blickrichtung der Förderrichtung (x) ein Dreieck (D) aufspannt, dessen Schenkel (S1, S2) Rutschflächen für ein ausgeschleustes Stückgut (S) bilden.

5. Sortieranlage (10) nach Anspruch 4, **dadurch gekennzeichnet, dass** durch die Positionierung der Kante (811) bezüglich des Scheitelpunkts (SP) in der ersten Position (P1) oder in die zweite Position (P2) einstellbar ist zu welcher Seite das Stückgut (S) über eine der Rutschflächen sortiert wird, wobei vor-zugsweise durch seitliches Bewegen der Kante (811) bezüglich des Scheitelpunkts (SP), der jeweilige Winkel (α, β) der Schenkel (S1, S2) und hierdurch die Neigung der Rutschflächen einstellbar ist.

6. Sortieranlage (10) nach Anspruch 3, **dadurch gekennzeichnet, dass** das bewegliche Sortierelement (81) in Blickrichtung der Förderrichtung (x) als verschwenkbares Prisma (P) ausgeführt ist, wobei eine der Kanten (811) bezüglich des Scheitelpunktes (SP) verschwenkbar ist um das Stückgut (S) in den mindestens einen Auffangbehälter (82, 83) zu sortieren, wobei das verschwenkbare Prisma (P) vorzugsweise zum Sortieren des Stückguts (S) um einen Drehpunkt (DP) verdrehbar angeordnet ist.

7. Sortieranlage (10) nach Anspruch 3, **dadurch gekennzeichnet, dass** das bewegliche Sortierelement (81) als Wippe (W) ausgeführt ist, wobei eine der Kanten (811) zum Ausschleusen des Stückguts (S) bezüglich des Scheitelpunktes (SP) verschwenkbar ist um das Stückgut (S) in den mindestens einen Auffangbehälter (82, 83, 84, 85) zu sortieren.

8. Sortieranlage (10) nach einem der vorhergehenden Ansprüche, **dadurch gekennzeichnet, dass** beim Ausschleusen die mindestens eine Kante (811) auf dem Weg von der ersten Position (P1) in die zweite Position (P2) oder von der zweiten Position (P2) in die erste Position (P1) den Scheitelpunkt (SP) durchläuft.

9. Verfahren zum Transport und Sortieren von Stückgut (S) mittels einer Sortieranlage nach einem der Ansprüche 3 bis 8, umfassend die Schritte
a. Zuführen der Stückgüter (S);
b. Ausschleusen mindestens eines Stückguts (S) mittels der Ausschleusevorrichtung (5), wobei
i. das bewegliche Ende (512) der ersten Ausschleuseeinheit (51) entlang der Förderrichtung (x) verfahren wird, und
ii. das bewegliche Ende (522) der zweiten Ausschleuseeinheit (52) entlang der Förderrichtung (x) verfahren wird, und
iii. das auszuschleusende Stückgut (S) durch eine zwischen der ersten (51) und der zweiten (52) Ausschleuseeinheit erzeugten Lücke (6) aus der Transportvorrichtung (1) ausgeschleust wird;
c. Sortieren des ausgeschleusten Stückguts (S), indem eine Kante (811) des mindestens einen beweglichen Sortierelements (81) bezüglich eines unterhalb der Transportflächen (515, 525) angeordneten Scheitelpunktes (SP) auf einer geradlinigen oder bogenförmigen Bahn (B) von einer ersten Position (P1) in eine zweite Position (P2) gebracht wird um das Stückgut (S) mit Bezug zur Förderrichtung (x) zu einer der Seiten in den mindestens einen Auffangbehälter (82, 83, 84, 85) zu sortieren.
d. Abführen der auf der Transportvorrichtung (1) verbliebenen Stückgüter (S).

10. Verfahren nach Anspruch 9, **dadurch gekennzeichnet, dass** das Stückgut (S) beim Ausschleusen mit Bezug zu den Transportflächen (515, 525) nach unten aus der Sortiervorrichtung (10) herausfällt.

11. Verfahren nach Anspruch 9 oder 10, **dadurch gekennzeichnet, dass** das bewegliche Sortierelement (81) als Sortierband (812) ausgeführt ist, welches in Blickrichtung der Förderrichtung (x) ein Dreieck (D) aufspannt, dessen Schenkel (S1, S2) Rutschflächen bilden, wobei eine Kante (811) bezüglich des Scheitelpunkts (SP) von der ersten Position (P1) in die zweite Position (P2) gesteuert wird zu welcher Seite das Stückgut (S) über eine der Rutschflächen sortiert wird, wobei vorzugsweise durch seitliches Bewegen der Kante (811) bezüglich des Scheitelpunkts (SP), der jeweilige Winkel (α, β) der Schenkel (S1, S2) und hierdurch die Neigung der Rutschflächen gesteuert wird.

12. Verfahren nach Anspruch 11, **dadurch gekennzeichnet, dass** das Stückgut (S) nach dem Ausschleusen über ein Herunterrutschen auf einer der Rutschflächen in den mindestens einen Auffangbehälter (82, 83, 84, 85) sortiert wird.

13. Verfahren nach Anspruch 9, **dadurch gekennzeichnet, dass** das bewegliche Sortierelement (81) in Blickrichtung der Förderrichtung (x) als verschwenkbares Prisma (P) ausgeführt ist, wobei eine der Kanten (811) bezüglich des Scheitelpunktes (SP) verschwenkt wird um das Stückgut (S) in den mindestens einen Auffangbehälter (82, 83, 84, 85) zu sortieren.

14. Verfahren nach Anspruch 9, **dadurch gekennzeichnet, dass** das bewegliche Sortierelement (S) als Wippe (W) ausgeführt ist, wobei eine der Kanten (811) zum Ausschleusen des Stückguts (S) bezüglich des Scheitelpunktes (SP) verschwenkt wird um das Stückgut (S) in den mindestens einen Auffangbehälter (82, 83) zu sortieren.

15. Verfahren nach einem der Ansprüche 9 bis 14, **dadurch gekennzeichnet, dass** das bewegliche Sortierelement (S) zum Sortieren beschleunigt wird um das Stückgut (S) in den mindestens einen Auffangbehälter (82, 83, 84, 85) zu schleudern.
